# EUROPEAN PATENT APPLICATION

(11) **EP 4 336 451 A1**
(43) Date of publication of application: **13.03.2024**
(21) Application number: 21943595.5
(22) Date of filing: 04.06.2021
(51) Int. Cl.: G06T 9/00, H04N 19/124

(54) **3D MAP ENCODING APPARATUS AND METHOD**

(71) Applicant: Huawei Technologies Co., Ltd., Shenzhen, Guangdong 518129 (CN)
(72) Inventor: CAO, Xiaoran, Shenzhen, Guangdong 518129 (CN); CAI, Kangying, Shenzhen, Guangdong 518129 (CN); WANG, Pei, Shenzhen, Guangdong 518129 (CN); TU, Chenxi, Shenzhen, Guangdong 518129 (CN); SU, Qi, Shenzhen, Guangdong 518129 (CN)
(74) Representative: MERH-IP Matias Erny Reichl Hoffmann Patentanwälte PartG mbB
(86) International application number: PCT/CN2021/098482
(87) International publication number: WO 2022/252234

(57) **Abstract**

An apparatus and a method for encoding a 3D map are provided. The apparatus for encoding a 3D map includes a compression module (51) and a transmission module (52). The compression module (51) is configured to compress data of a 3D map to obtain a bitstream of the 3D map, where the 3D map includes a plurality of 3D map points, and the data of the 3D map includes data of the plurality of 3D map points. The transmission module (52) is configured to transmit the bitstream of the 3D map. With the use of the apparatus, a data volume of a 3D map can be reduced, thereby reducing transmission bandwidth and improving transmission efficiency.

## Description

### TECHNICAL FIELD

This application relates to 3D map technologies, and in particular, to an apparatus and a method for encoding a 3D map.

### BACKGROUND

Virtual reality (virtual reality, VR), augmented reality (augmented reality, AR) and mixed reality (mixed reality, MR) are multimedia virtual scene technologies emerging in recent years. Such technologies can be used to create virtual reality and overlay it with a real world to produce a new visual environment and interactive experience. In such an application, an electronic device needs to determine pose information of the electronic device in a current environment, to accurately implement fusion between a virtual object and a real scene.

In addition, in applications such as autonomous driving, autonomous navigation, uncrewed aerial vehicle automatic inspection, and industrial robots, a carrying device such as a vehicle, an uncrewed aerial vehicle, or a robot needs to determine a pose of an electronic device carried by the carrying device, to determine a pose of the carrying device in a current environment, so as to perform accurate route planning, navigation, detection, and control.

In the foregoing applications, for a problem that the pose of the electronic device in the current environment needs to be determined, a typical solution is as follows: The electronic device receives, from a server or another device, a 3D map of an environment in which the electronic device is located, collects visual information in the environment by using a local sensor, and determines the current pose of the electronic device based on the collected visual information and the downloaded 3D map.

However, an original 3D map usually includes a large data volume, and map transmission needs to consume a large amount of bandwidth and time, which severely limits application performance and affects user experience.

### SUMMARY

This application provides an apparatus and a method for encoding a 3D map, to reduce a data volume of a 3D map, thereby reducing transmission bandwidth and improving transmission efficiency.

According to a first aspect, this application provides a codec system for a 3D map, including: an encoding apparatus and a decoding apparatus. The encoding apparatus is communicatively connected to the decoding apparatus. The encoding apparatus is configured to: compress data of a 3D map to obtain a bitstream of the 3D map, and send the bitstream of the 3D map to the decoding apparatus, where the 3D map includes a plurality of 3D map points, and the data of the 3D map includes data of the plurality of 3D map points. The decoding apparatus is configured to: receive the bitstream of the 3D map, and decompress the bitstream of the 3D map to obtain the data of the 3D map.

The 3D map may include the plurality of 3D map points, and correspondingly, the data of the 3D map may include the data of the plurality of 3D map points. The 3D map point is a point of interest or a point having a significant feature in an environment.

In this embodiment of this application, a compression module may compress the data of the 3D map, to reduce a data volume of the 3D map, for example, to reduce the data volume of the 3D map from a terabyte (Terabyte, TB) level to a gigabyte (Gigabyte, GB) level. Therefore, in a scenario in which a 3D map needs to be transmitted, transmitting compressed data of the 3D map instead of transmitting original data of the 3D map can reduce a data volume for transmission, and can further reduce bandwidth occupied by the transmission, thereby improving transmission efficiency of the 3D map.

In a possible implementation, the encoding apparatus is a cloud server, and the decoding apparatus is an electronic device; or the encoding apparatus is a first electronic device, and the decoding apparatus is a second electronic device. The decoding apparatus is further configured to send a 3D map download request to the decoding apparatus, where the 3D map download request includes location indication information. The encoding apparatus is further configured to: receive the 3D map download request, and send, to the decoding apparatus according to the 3D map download request, a bitstream that is of the 3D map and that corresponds to the location indication information.

The foregoing electronic device may be a user terminal device or an electronic device carried in a carrying device.

In a possible implementation, the encoding apparatus is an electronic device, and the decoding apparatus is a cloud server. The encoding device is specifically configured to: after the 3D map is created, send the bitstream of the 3D map to the decoding apparatus.

Optionally, in this embodiment of this application, the electronic device may collect visual information by using a sensor, and determine a current pose of the electronic device with reference to the visual information and a 3D map from a server.

The 3D map is provided by the server. To be specific, the server creates the 3D map, then compresses the 3D map, and transmits compressed data of the 3D map to the electronic device. After receiving the compressed data of the 3D map, the electronic device performs decompression to obtain reconstructed data of the 3D map, and determines the current pose of the electronic device with reference to the collected visual information and the 3D map. The pose is location and orientation information of the electronic device, and may be an absolute pose in the world coordinate system, or may be a relative pose relative to a point in an environment.

In this embodiment of this application, the server may create the 3D map in advance, compress the 3D map, and then store compressed data of the 3D map locally. In this way, storage space can be saved. In addition, the server may transmit the compressed data of the 3D map to another device, for example, a cloud storage.
1. The server creates the 3D map, compresses the 3D map to obtain the compressed data of the 3D map, and stores the compressed data locally.
   The server compresses the 3D map, to save local storage space.
2. The electronic device sends a map download request to the server. The map download request is triggered in two manners:
   (1) A user starts a map application installed on the electronic device, and the application uploads, to a server corresponding to the application, location information obtained based on GPS positioning or Wi-Fi positioning. The upload operation may trigger a map download request. Because uploaded content includes the location information, the server may perform preliminary estimation based on the location information, and transmit, to the electronic device, compressed data of a 3D map of an area to which a positioning point indicated by the location information belongs. A range of the area to which the positioning point indicated by the location information belongs may be preset. For example, the area to which the positioning point belongs may be an administrative region (including a county, a city, a country, or an administrative region) at any level in which the positioning point is located, or may be a circular area centered on the positioning point and using a specified distance as a radius.
   (2) The user starts a map application installed on the electronic device, and actively enters or selects an area on the application. For example, the user actively enters "xx business center", or selects "street A" from a list of "street A, street B, and street C". The foregoing operations of the user may trigger a map download request. Regardless of whether the user enters or selects a geographical location, the server accordingly transmits compressed data of a 3D map of the geographical location to the electronic device.

   It should be understood that, in this embodiment of this application, in addition to the foregoing two manners, another manner may be used for triggering a map download request. For example, the electronic device automatically detects whether a condition for downloading a 3D map or starting downloading a 3D map is satisfied, or the electronic device starts downloading a 3D map upon detecting an ambient light change or an environment change, to request downloading of a 3D map of an area range from the server. A size of the area range is not specifically limited.
3. The server sends the compressed data of the 3D map to the electronic device.
4. The electronic device collects the visual information.
   It should be noted that step 3 and step 4 are independent of each other, and a sequence is not limited.
5. The electronic device decompresses the compressed data of the 3D map to obtain the reconstructed data of the 3D map.
6. The electronic device performs positioning in the 3D map based on the visual information, to obtain a pose corresponding to the visual information.

After receiving the compressed data of the 3D map, the electronic device does not need to immediately decompress the compressed data, and needs to decompress the compressed data to obtain the reconstructed data of the 3D map only before performing positioning based on the visual information. For example, the user may pre-download compressed data of a 3D map of an area range by downloading an "offline map", and decompress the compressed data of the 3D map only when positioning is required.

Optionally, in this embodiment of this application, the electronic device may collect visual information by using a sensor, and a server determines a current pose of the electronic device with reference to the visual information from the electronic device and a 3D map.

The 3D map is provided by the server. To be specific, the server creates the 3D map, then compresses the 3D map, and stores compressed data of the 3D map locally. When receiving the visual information from the electronic device, the server performs decompression to obtain reconstructed data of the 3D map, and determines the current pose of the electronic device with reference to the visual information and the 3D map.
1. The server creates the 3D map, compresses the 3D map to obtain the compressed data of the 3D map, and stores the compressed data locally.
2. The electronic device collects the visual information.
3. The electronic device sends the visual information to the server.
4. The server decompresses the compressed data of the 3D map to obtain the reconstructed data of the 3D map.
   It should be understood that the server compresses the 3D map to save storage space.
5. The server performs positioning in the 3D map based on the visual information, to obtain a pose corresponding to the visual information.
6. The server sends the pose to the electronic device.

Optionally, in this embodiment of this application, the electronic device may collect visual information by using a sensor, and determine a current pose of the electronic device with reference to the visual information and a 3D map.

The 3D map is provided by the electronic device. To be specific, the electronic device creates the 3D map, then compresses the 3D map, and stores compressed data of the 3D map locally. When the visual information is collected, the electronic device performs decompression to obtain reconstructed data of the 3D map, and determines the current pose of the electronic device with reference to the collected visual information and the 3D map.
1. The electronic device creates the 3D map, compresses the 3D map to obtain the compressed data of the 3D map, and stores the compressed data locally.
   It should be understood that the electronic device compresses the 3D map to save storage space.
2. The electronic device collects the visual information by using the sensor.
3. The electronic device decompresses the compressed data of the 3D map to obtain the reconstructed data of the 3D map.
4. The electronic device performs positioning in the 3D map based on the visual information, to obtain a pose corresponding to the visual information.

Optionally, in this embodiment of this application, the second electronic device may collect visual information by using a sensor, and determine a current pose of the second electronic device with reference to the visual information and a 3D map from a server.

The 3D map is created by the first electronic device. To be specific, the first electronic device creates the 3D map, compresses the 3D map, and then sends compressed data of the 3D map to the server. The server then sends the compressed data of the 3D map to the second electronic device. The second electronic device performs decompression to obtain reconstructed data of the 3D map, and determines the current pose of the second electronic device with reference to the collected visual information and the 3D map.

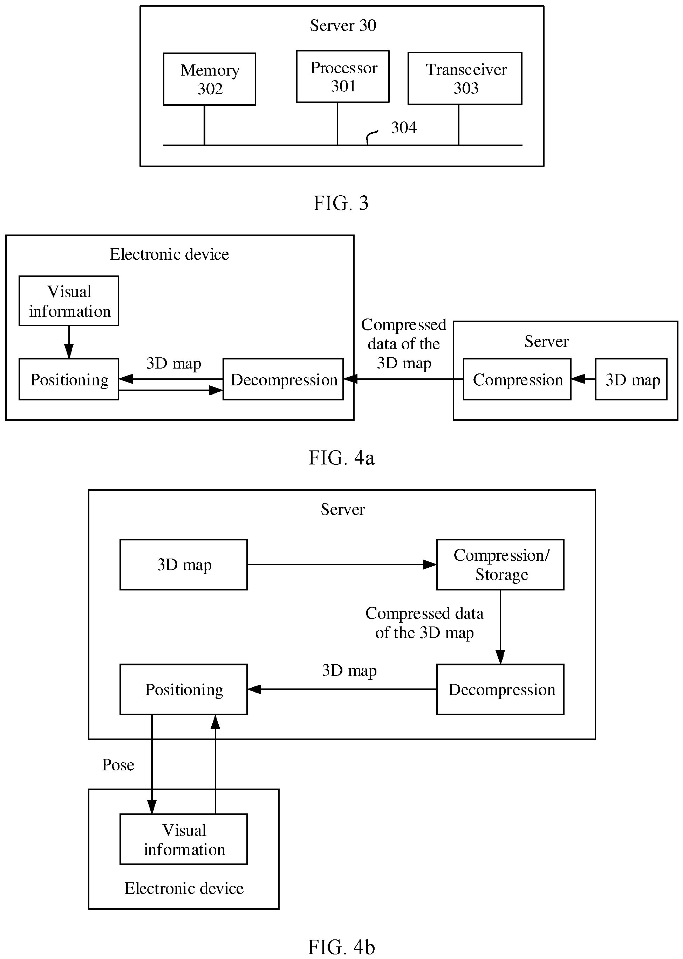

In this embodiment of this application, the first electronic device may create the 3D map in advance, compress the 3D map, and then transmit the compressed data of the 3D map to the server. In this way, transmission bandwidth can be reduced.
1. The first electronic device creates the 3D map, compresses the 3D map to obtain the compressed data of the 3D map.
2. The first electronic device sends the compressed data of the 3D map to the server.
   The first electronic device compresses the 3D map and then transmits the compressed data of the 3D map, to reduce transmission bandwidth and improve transmission efficiency.
3. The second electronic device sends a map download request to the server.
   The second electronic device may send the map download request based on a trigger manner shown in FIG. 4a.
4. The server sends the compressed data of the 3D map to the second electronic device.
5. The second electronic device decompresses the compressed data of the 3D map to obtain the reconstructed data of the 3D map.
6. The second electronic device collects the visual information by using the sensor.
7. The second electronic device performs positioning in the 3D map based on the visual information, to obtain a pose corresponding to the visual information.

Optionally, in this embodiment of this application, the second electronic device may collect visual information by using a sensor, and a server determines a current pose of the second electronic device with reference to the visual information from the second electronic device and a 3D map from the first electronic device.

The 3D map is created by the first electronic device. To be specific, the first electronic device creates the 3D map, compresses the 3D map, and then sends compressed data of the 3D map to the server. The server performs decompression to obtain reconstructed data of the 3D map, and determines the current pose of the second electronic device with reference to the visual information from the second electronic device and the 3D map.
1. The first electronic device creates the 3D map, compresses the 3D map to obtain the compressed data of the 3D map.
2. The first electronic device sends the compressed data of the 3D map to the server.
3. The second electronic device collects the visual information by using the sensor.
4. The second electronic device sends a positioning request to the server, where the positioning request carries the visual information.
5. The server decompresses the compressed data of the 3D map to obtain the reconstructed data of the 3D map.
6. The server performs positioning in the 3D map based on the visual information, to obtain a pose corresponding to the visual information.
7. The server sends, to the second electronic device, the pose obtained through positioning.

Optionally, in this embodiment of this application, the second electronic device may collect visual information by using a sensor, and determine a current pose of the second electronic device with reference to the visual information and a 3D map from the first electronic device.

The 3D map is created by the first electronic device. To be specific, the first electronic device creates the 3D map, compresses the 3D map, and then sends compressed data of the 3D map to the second electronic device. The second electronic device performs decompression to obtain reconstructed data of the 3D map, and determines the current pose of the second electronic device with reference to the collected visual information and the 3D map from the first electronic device.
1. The first electronic device creates the 3D map, compresses the 3D map to obtain the compressed data of the 3D map, and stores the compressed data locally.
2. The second electronic device sends a map download request to the first electronic device.
3. The first electronic device sends the compressed data of the 3D map to the second electronic device.
4. The second electronic device decompresses the compressed data of the 3D map to obtain the reconstructed data of the 3D map.
5. The second electronic device collects the visual information by using the sensor.
6. The second electronic device performs positioning in the 3D map based on the visual information, to obtain a pose corresponding to the visual information.

In a possible implementation, the data of the 3D map further includes a plurality of area descriptors, and any one of the plurality of area descriptors describes features of a part of or all 3D map points of the plurality of 3D map points.

For any one of the plurality of area descriptors, the area descriptor may describe features of a part of or all 3D map points of the plurality of 3D map points. In this case, the area descriptor and the 3D map point are in a one-to-many relationship. A feature of each of the plurality of 3D map points may be described by a part of or all area descriptors of the plurality of area descriptors. In this case, the 3D map point and the area descriptor are in a one-to-many relationship. It can be learned that a plurality of area descriptors and a plurality of 3D map points are in a many-to-many relationship. A method for generating an area descriptor includes but is not limited to a conventional method such as a bag of words (bag of words, BOW) and a vector of locally aggregated descriptors (vector of locally aggregated descriptors, VLAD), and a novel method based on NetVLAD or artificial intelligence (artificial intelligence, AI). Similarly, a plurality of area descriptors may be identified by numbers to distinguish between the plurality of area descriptors. Similarly, however, the numbers are not intended to limit a sequence of the plurality of area descriptors.

In a possible implementation, data of any one of the plurality of 3D map points includes a 3D map point descriptor and a 3D map point spatial location.

The 3D map point descriptor is a vector (vector), used to represent a local feature of a corresponding 3D map point.

A 3D map point spatial location may be represented by using X, Y, and Z on three-dimensional spatial axes, or may be represented by using a longitude, a latitude, and an altitude, or may be represented by using polar coordinates or the like. A method for representing a 3D map point spatial location is not specifically limited in embodiments of this application. A 3D map point spatial location may be an absolute location of a 3D map point or a relative location of a 3D map point.

In a possible implementation, the encoding apparatus is further configured to create the 3D map.

In a possible implementation, the decoding apparatus is further configured to perform positioning based on the 3D map.

According to a second aspect, this application provides an apparatus for encoding a 3D map, including a compression module and a transmission module. The compression module is configured to compress data of a 3D map to obtain a bitstream of the 3D map, where the 3D map includes a plurality of 3D map points, and the data of the 3D map includes data of the plurality of 3D map points. The transmission module is configured to transmit the bitstream of the 3D map.

In this embodiment of this application, the compression module may perform compression on data of a 3D map, to reduce a data volume of the 3D map. In a scenario in which a 3D map needs to be transmitted, transmitting compressed data of the 3D map instead of transmitting original data of the 3D map can reduce a data volume for transmission and can further reduce bandwidth occupied by the transmission, thereby improving transmission efficiency of the 3D map.

In this embodiment of this application, the compression may include at least one of compaction and prediction, and the compaction may include at least one of quantization and binarization.

Quantization means mapping to-be-processed data to one or more quantization indexes, where each quantization index corresponds to one quantization center. A quantity of bits in the quantization index is usually obviously less than a quantity of bits in original data, to save storage or transmission bandwidth. Quantization methods include but are not limited to scalar quantization, vector quantization, product quantization, and the like.

Binarization means processing to-be-processed data into a binary string represented by a binary symbol. The binarization may be, for example, hashing. The principle of the hashing is to map to-be-processed data to a Hamming space (a binary space), to generate a binary hash code. A quantity of bits in a hash code is usually obviously less than a quantity of bits in original data, to save storage and transmission bandwidth. In addition, a calculation amount of a Hamming distance between hash codes is usually less than that of a Euclidean distance of the original data, thereby reducing calculation complexity. Hashing methods include but are not limited to: an iterative quantization (iterative quantization, ITQ) hash method, a locality sensitive hashing (locality sensitive hashing, LSH) method, and the like.

Prediction means performing prediction on to-be-processed data by using processed data, to obtain residual data of the to-be-processed data. Apparently, a data volume of the residual data is less than an original data volume, so as to implement data compression. Selection of reference data may be pre-agreed. For example, previously processed data is fixedly used as the reference data, and in this case, the reference data does not need to be identified in the bitstream. For another example, any processed data is used as the reference data, and in this case, identification information of the reference data needs to be written into the bitstream, and includes a number of the reference data, or other information that can be used to infer the reference data.

In the foregoing description of the data of the 3D map, it can be learned that a sequence of the plurality of 3D map points included in the 3D map is meaningless. Therefore, if compression or encoding of the 3D map point is involved, the sequence of the plurality of 3D map points is not limited, that is, the plurality of 3D map points may be compressed or encoded separately in any sequence.

Based on the principle of prediction, it is considered that if a similarity between prediction data of to-be-processed data and the to-be-processed data is relatively high, there is a relatively high probability that the obtained residual data of the to-be-processed data is 0, so that compression performance can be improved, thereby reducing a data volume for encoding. In this embodiment of this application, a plurality of pieces of to-be-processed data may be reordered before prediction, to improve correlation between adjacent to-be-processed data, thereby further reducing a data volume of the residual data. Optionally, one piece of to-be-processed data may be predicted based on one or more pieces of processed data, to obtain residual data of the to-be-processed data; or a plurality of pieces of to-be-processed data may be predicted based on one or more pieces of processed data, to obtain residual data of the plurality of pieces of to-be-processed data.

In addition, the compression may further include encapsulation, to encapsulate to-be-encoded data into a bitstream. The encapsulation may use any encoding algorithm, for example, entropy encoding. Entropy encoding is a lossless data compression method. Entropy encoding algorithms include but are not limited to: Huffman (huffman) encoding, arithmetic encoding, a compression/decompression algorithm improved based on an LZ77 compression algorithm (lempel-ziv-markov chain-algorithm, LZMA), a function library algorithm for data compression (zlib), and the like.

In a possible implementation, the data of the 3D map further includes a plurality of area descriptors, and any one of the plurality of area descriptors describes features of a part of or all 3D map points of the plurality of 3D map points.

In a possible implementation, data of any one of the plurality of 3D map points includes a 3D map point descriptor and a 3D map point spatial location.

In a possible implementation, the apparatus for encoding a 3D map is a cloud server or an electronic device. The transmission module is further configured to: receive a 3D map download request, where the 3D map download request includes location indication information; and send, according to the 3D map download request, a bitstream that is of the 3D map and that corresponds to the location indication information.

In a possible implementation, the apparatus for encoding a 3D map is an electronic device. The transmission module is specifically configured to: after the 3D map is created, send the bitstream of the 3D map.

A plurality of implementations of a compression module are as follows.

In a possible implementation, the compression module includes a compaction module and/or a prediction module, and an encapsulation module. The compaction module is configured to perform compaction on input first data to output compacted data of the first data. The prediction module is configured to perform prediction on input second data to output residual data of the second data. The encapsulation module is configured to process input third data to output the bitstream of the 3D map. The first data is the data of the 3D map, the second data is the data of the 3D map or the compacted data of the first data, and the third data is the compacted data of the first data or the residual data of the second data.

Optionally, the compression module includes only a compaction module or a prediction module, and an encapsulation module.

Optionally, the compression module includes a compaction module, a prediction module, and an encapsulation module.

In a possible implementation, the compaction module includes a quantization module and/or a binarization module. The quantization module is configured to perform quantization on input fourth data to output quantized data of the fourth data. The binarization module is configured to perform binarization on input fifth data to output binary data of the fifth data. The fourth data is the data of the 3D map, and the fifth data is the data of the 3D map or the quantized data of the fourth data.

Optionally, the compaction module includes only a quantization module or a binarization module.

Optionally, the compaction module includes a quantization module and a binarization module.

In a possible implementation, the quantization module includes a first quantization module and a second quantization module, and/or the binarization module includes a first binarization module and a second binarization module, and the prediction module includes a first prediction module and a second prediction module. The first quantization module is configured to perform quantization on input sixth data to output quantized data of the sixth data. The first binarization module is configured to perform binarization on input seventh data to output binary data of the seventh data. The first prediction module is configured to perform prediction on input eighth data to output residual data of the eighth data. The sixth data is one of the plurality of area descriptors, the seventh data is one of the plurality of area descriptors or the quantized data of the sixth data, and the eighth data is one of the plurality of area descriptors, the quantized data of the sixth data, or the binary data of the seventh data. The second quantization module is configured to perform quantization on input ninth data to output quantized data of the ninth data. The second binarization module is configured to perform binarization on input tenth data to output binary data of the tenth data. The first prediction module is configured to perform prediction on input eleventh data to output residual data of the eleventh data. The ninth data is data of one of the plurality of 3D map points, the tenth data is data of one of the plurality of 3D map points or the quantized data of the ninth data, and the eleventh data is data of one of the plurality of 3D map points, the quantized data of the ninth data, or the binary data of the tenth data.

In a possible implementation, the quantization module includes a first quantization module, a second quantization module, and a third quantization module, and/or the binarization module includes a first binarization module, a second binarization module, and a third binarization module, and the prediction module includes a first prediction module, a second prediction module, and a third prediction module. The first quantization module is configured to perform quantization on input twelfth data to output quantized data of the twelfth data. The first binarization module is configured to perform binarization on input thirteenth data to output binary data of the thirteenth data. The first prediction module is configured to perform prediction on input fourteenth data to output residual data of the fourteenth data. The twelfth data is one of the plurality of area descriptors, the thirteenth data is one of the plurality of area descriptors or the quantized data of the twelfth data, and the fourteenth data is one of the plurality of area descriptors, the quantized data of the twelfth data, or the binary data of the thirteenth data. The second quantization module is configured to perform quantization on input fifteenth data to output quantized data of the fifteenth data. The second binarization module is configured to perform binarization on input sixteenth data to output binary data of the sixteenth data. The second prediction module is configured to perform prediction on input seventeenth data to output residual data of the seventeenth data. The fifteenth data is a 3D map point descriptor of one of the plurality of 3D map points, the sixteenth data is a 3D map point descriptor of one of the plurality of 3D map points or the quantized data of the fifteenth data, and the seventeenth data is a 3D map point descriptor of one of the plurality of 3D map points, the quantized data of the fifteenth data, or the binary data of the sixteenth data. The third quantization module is configured to perform quantization on input eighteenth data to output quantized data of the eighteenth data. The third binarization module is configured to perform binarization on input nineteenth data to output binary data of the nineteenth data. The third prediction module is configured to perform prediction on input twentieth data to output residual data of the twentieth data. The eighteenth data is a spatial location of one of the plurality of 3D map points, the nineteenth data is a spatial location of one of the plurality of 3D map points or the quantized data of the eighteenth data, and the twentieth data is a spatial location of one of the plurality of 3D map points, the quantized data of the eighteenth data, or the binary data of the nineteenth data.

In a possible implementation, the compression module includes a first compression submodule and a second compression submodule. The first compression submodule is configured to compress input twenty-first data to output a bitstream of the twenty-first data. The second compression submodule is configured to compress input twenty-second data to output a bitstream of the twenty-second data. The twenty-first data is one of the plurality of area descriptors, and the twenty-second data is data of one of the plurality of 3D map points.

In a possible implementation, the first compression submodule includes a first compaction module and/or a first prediction module, and a first encapsulation module; and the second compression submodule includes a second compaction module and/or a second prediction module, and a second encapsulation module. The first compaction module is configured to perform compaction on input twenty-third data to output compacted data of the twenty-third data. The first prediction module is configured to perform prediction on input twenty-fourth data to output residual data of the twenty-fourth data. The first encapsulation module is configured to process input twenty-fifth data to output a bitstream of the twenty-fifth data. The twenty-third data is one of the plurality of area descriptors, the twenty-fourth data is one of the plurality of area descriptors or the compacted data of the twenty-third data, and the twenty-fifth data is the compacted data of the twenty-third data or the residual data of the twenty-fourth data. The second compaction module is configured to perform compaction on input twenty-sixth data to output compacted data of the twenty-sixth data. The second prediction module is configured to perform prediction on input twenty-seventh data to output residual data of the twenty-seventh data. The second encapsulation module is configured to process input twenty-eighth data to output a bitstream of the twenty-eighth data. The twenty-sixth data is data of one of the plurality of 3D map points, the twenty-seventh data is data of one of the plurality of 3D map points or the compacted data of the twenty-sixth data, and the twenty-eighth data is the compacted data of the twenty-sixth data or the residual data of the twenty-seventh data.

In a possible implementation, the first compaction module includes a first quantization module and/or a first binarization module; and the second compaction module includes a second quantization module and/or a second binarization module. The first quantization module is configured to perform quantization on input twenty-ninth data to output quantized data of the twenty-ninth data. The first binarization module is configured to perform binarization on input thirtieth data to output binary data of the thirtieth data. The twenty-ninth data is one of the plurality of area descriptors, and the thirtieth data is one of the plurality of area descriptors or the quantized data of the twenty-ninth data. The second quantization module is configured to perform quantization on input thirty-first data to output quantized data of the thirty-first data. The second binarization module is configured to perform binarization on input thirty-second data to output binary data of the thirty-second data. The thirty-first data is data of one of the plurality of 3D map points, and the thirtieth data is data of one of the plurality of 3D map points or the quantized data of the thirty-first data.

In a possible implementation, the compression module includes a first compression submodule, a second compression submodule, and a third compression submodule. The first compression submodule is configured to compress input thirty-third data to output a bitstream of the thirty-third data. The second compression submodule is configured to compress input thirty-fourth data to output a bitstream of the thirty-fourth data. The third compression submodule is configured to compress input thirty-fifth data to output a bitstream of the thirty-fifth data. The thirty-third data is one of the plurality of area descriptors, the thirty-fourth data is a 3D map point descriptor of one of the plurality of 3D map points, and the thirty-fifth data is a 3D map point spatial location of one of the plurality of 3D map points.

In a possible implementation, the first compression submodule includes a first compaction module and/or a first prediction module, and a first encapsulation module; the second compression submodule includes a second compaction module and/or a second prediction module, and a second encapsulation module; and the third compression submodule includes a third compaction module and/or a third prediction module, and a third encapsulation module. The first compaction module is configured to perform compaction on input thirty-sixth data to output compacted data of the thirty-sixth data. The first prediction module is configured to perform prediction on input thirty-seventh data to obtain residual data of the thirty-seventh data. The first encapsulation module is configured to process input thirty-eighth data to obtain a bitstream of the thirty-eighth data. The thirty-sixth data is one of the plurality of area descriptors, the thirty-seventh data is one of the plurality of area descriptors or the compacted data of the thirty-sixth data, and the thirty-eighth data is the compacted data of the thirty-sixth data or the residual data of the thirty-seventh data. The second compaction module is configured to perform compaction on input thirty-ninth data to output compacted data of the thirty-ninth data. The second prediction module is configured to perform prediction on input fortieth data to obtain residual data of the fortieth data. The second encapsulation module is configured to process input forty-first data to obtain a bitstream of the forty-first data. The thirty-ninth data is a 3D map point descriptor of one of the plurality of 3D map points, the fortieth data is a 3D map point descriptor of one of the plurality of 3D map points or the compacted data of the thirty-ninth data, and the forty-first data is the compacted data of the thirty-ninth data or the residual data of the fortieth data. The third compaction module is configured to perform compaction on input forty-second data to output compacted data of the forty-second data. The third prediction module is configured to perform prediction on input forty-third data to obtain residual data of the forty-third data. The third encapsulation module is configured to process input forty-fourth data to obtain a bitstream of the forty-fourth data. The forty-second data is a spatial location of one of the plurality of 3D map points, the forty-third data is a spatial location of one of the plurality of 3D map points or the compacted data of the forty-second data, and the forty-fourth data is the compacted data of the forty-second data or the residual data of the forty-third data.

In a possible implementation, the first compaction module includes a first quantization module and/or a first binarization module; the second compaction module includes a second quantization module and/or a second binarization module; and the third compaction module includes a third quantization module and/or a third binarization module. The first quantization module is configured to perform quantization on input forty-fifth data to output quantized data of the forty-fifth data. The first binarization module is configured to perform binarization on input forty-sixth data to output binary data of the forty-sixth data. The forty-fifth data is one of the plurality of area descriptors, and the forty-sixth data is one of the plurality of area descriptors or the quantized data of the forty-fifth data. The second quantization module is configured to perform quantization on input forty-seventh data to output quantized data of the forty-seventh data. The second binarization module is configured to perform binarization on input forty-eighth data to output binary data of the forty-eighth data. The forty-seventh data is a 3D map point descriptor of one of the plurality of 3D map points, and the forty-eighth data is a 3D map point descriptor of one of the plurality of 3D map points or the quantized data of the forty-seventh data. The third quantization module is configured to perform quantization on input forty-ninth data to output quantized data of the forty-ninth data. The third binarization module is configured to perform binarization on input fiftieth data to output binary data of the fiftieth data. The forty-ninth data is a spatial location of one of the plurality of 3D map points, and the fiftieth data is a spatial location of one of the plurality of 3D map points or the quantized data of the forty-ninth data.

According to a third aspect, this application provides a method for encoding a 3D map, including: processing data of a 3D map to obtain a bitstream of the 3D map, where the 3D map includes a plurality of 3D map points, and the data of the 3D map includes data of the plurality of 3D map points; and transmitting the bitstream of the 3D map.

In this embodiment of this application, the compression module may perform compression on data of a 3D map, to reduce a data volume of the 3D map. In a scenario in which a 3D map needs to be transmitted, transmitting compressed data of the 3D map instead of transmitting original data of the 3D map can reduce a data volume for transmission and can further reduce bandwidth occupied by the transmission, thereby improving transmission efficiency of the 3D map.

In a possible implementation, the data of the 3D map further includes a plurality of area descriptors, and any one of the plurality of area descriptors describes features of a part of or all 3D map points of the plurality of 3D map points.

In a possible implementation, data of any one of the plurality of 3D map points includes a 3D map point descriptor and a 3D map point spatial location.

In a possible implementation, the method further includes: receiving a 3D map download request, where the 3D map download request includes location indication information; and the transmitting a bitstream of the 3D map includes: sending, according to the 3D map download request, a bitstream that is of the 3D map and that corresponds to the location indication information.

In a possible implementation, the transmitting a bitstream of the 3D map includes: after the 3D map is created, sending the bitstream of the 3D map.

In a possible implementation, the processing data of a 3D map to obtain a bitstream of the 3D map includes: performing compaction on first data to obtain compacted data of the first data, and/or performing prediction on second data to obtain residual data of the second data; and processing third data to obtain the bitstream of the 3D map. The first data is the data of the 3D map, the second data is the data of the 3D map or the compacted data of the first data, and the third data is the compacted data of the first data or the residual data of the second data.

In a possible implementation, before the performing prediction on second data to obtain residual data of the second data, the method further includes: reordering a plurality of pieces of the second data; and the performing prediction on second data to obtain residual data of the second data includes: performing, based on a result of the reordering, prediction on at least one piece of the second data, to obtain residual data of the at least one piece of the second data.

In a possible implementation, the performing compaction on first data to obtain compacted data of the first data includes: performing quantization on fourth data to obtain quantized data of the fourth data, and/or performing binarization on fifth data to obtain binary data of the fifth data. The fourth data is the first data, the fifth data is the first data or the quantized data of the fourth data, and correspondingly, the compacted data of the first data includes the quantized data of the fourth data and/or the binary data of the fifth data.

According to a fourth aspect, this application provides an apparatus for encoding a 3D map, including: an encoder, configured to compress data of a 3D map to obtain a 3D map that is obtained through compression and that is in a bitstream form, where the 3D map includes a plurality of 3D map points, and the data of the 3D map includes data of the plurality of 3D map points; and a memory, configured to store the 3D map that is obtained through compression and that is in a bitstream form.

In this embodiment of this application, the compression module may perform compression on data of a 3D map, to reduce a data volume of the 3D map. In a scenario in which a 3D map needs to be stored, storing a 3D map that is obtained through compression and that is in a bitstream form instead of storing original data of the 3D map can reduce a data volume for transmission and can further save storage space.

In a possible implementation, the data of the 3D map further includes a plurality of area descriptors, and any one of the plurality of area descriptors describes features of a part of or all 3D map points of the plurality of 3D map points.

In a possible implementation, data of any one of the plurality of 3D map points includes a 3D map point descriptor and a 3D map point spatial location.

In a possible implementation, the apparatus for encoding a 3D map is a cloud server or an electronic device.

According to a fifth aspect, this application provides a computer-readable storage medium, including a computer program. When the computer program is executed on a computer, the computer is enabled to perform the method according to any one of the implementations of the third aspect.

According to a sixth aspect, this application provides a computer program. When the computer program is executed on a computer, the computer is enabled to perform the method according to any one of the implementations of the third aspect.

According to a seventh aspect, this application provides a non-transitory storage medium, including a bitstream encoded according to the method according to the third aspect or according to any one of the implementations of the third aspect.

### BRIEF DESCRIPTION OF DRAWINGS

FIG. 1 is a schematic diagram of an application architecture according to an embodiment of this application;
FIG. 2 is a schematic diagram of a structure of an electronic device 20 according to an embodiment of this application;
FIG. 3 is a schematic diagram of a structure of a server 30 according to an embodiment of this application;
FIG. 4a is a schematic diagram of an application scenario according to an embodiment of this application;
FIG. 4b is a schematic diagram of an application scenario according to an embodiment of this application;
FIG. 4c is a schematic diagram of an application scenario according to an embodiment of this application;
FIG. 4d is a schematic diagram of an application scenario according to an embodiment of this application;
FIG. 4e is a schematic diagram of an application scenario according to an embodiment of this application;
FIG. 4f is a schematic diagram of an application scenario according to an embodiment of this application;
FIG. 4g is a schematic diagram of a user interface displayed by an electronic device according to an embodiment of this application;
FIG. 5 is a diagram of a structure of an apparatus 50 for encoding a 3D map according to an embodiment of this application;
FIG. 6a is a diagram of a structure of an apparatus 60-1 for encoding a 3D map according to an embodiment of this application;
FIG. 6b is a diagram of a structure of an apparatus 60-2 for encoding a 3D map according to an embodiment of this application;
FIG. 6c is a diagram of a structure of an apparatus 60-3 for encoding a 3D map according to an embodiment of this application;
FIG. 6d is a diagram of a structure of a compaction module 611-1/611-2 according to an embodiment of this application;
FIG. 6e is a diagram of a structure of an apparatus 60-4 for encoding a 3D map according to an embodiment of this application;
FIG. 6f is a diagram of a structure of an apparatus 60-5 for encoding a 3D map according to an embodiment of this application;
FIG. 7a is a diagram of a structure of an apparatus 70-1 for encoding a 3D map according to an embodiment of this application;
FIG. 7b is a diagram of a structure of an apparatus 70-2 for encoding a 3D map according to an embodiment of this application;
FIG. 8a is a diagram of a structure of an apparatus 80-1 for encoding a 3D map according to an embodiment of this application;
FIG. 8b is a diagram of a structure of an apparatus 80-2 for encoding a 3D map according to an embodiment of this application;
FIG. 9 is a flowchart of a process 900 of a method for encoding a 3D map according to an embodiment of this application; and
FIG. 10 is a diagram of a structure of an apparatus 100 for encoding a 3D map according to an embodiment of this application.

### DESCRIPTION OF EMBODIMENTS

To make objectives, technical solutions, and advantages of this application clearer, the following clearly and completely describes technical solutions in this application with reference to accompanying drawings in this application. Clearly, described embodiments are merely some but not all of embodiments of this application. Based on embodiments of this application, all other embodiments obtained by a person of ordinary skill in the art without creative efforts fall within the protection scope of this application.

In embodiments of the specification, claims, and accompanying drawings of this application, the terms "first", "second", and the like are merely intended for distinguishing and description, and shall not be understood as an indication or implication of relative importance or an indication or implication of an order. In addition, the terms "include", "have", and any variant thereof are intended to cover non-exclusive inclusion, for example, inclusion of a series of steps or units. A method, a system, a product, or a device is not necessarily limited to clearly listed steps or units, but may include other steps or units that are not clearly listed and that are inherent to the process, the method, the product, or the device.

It should be understood that, in this application, "at least one (item)" is one or more, and "a plurality of" is two or more. The term "and/or" describes an association relationship of associated objects, and indicates that three relationships may exist. For example, "A and/or B" may indicate the following three cases: Only A exists, only B exists, and both A and B exist. A and B may be singular or plural. The character "/" usually indicates an "or" relationship between associated objects. "At least one of the following items" or a similar expression thereto indicates any combination of the items, including one of the items or any combination of a plurality of the items. For example, at least one of a, b, or c may indicate a, b, c, a and b, a and c, b and c, or a, b, and c, where a, b, and c may be singular or plural.

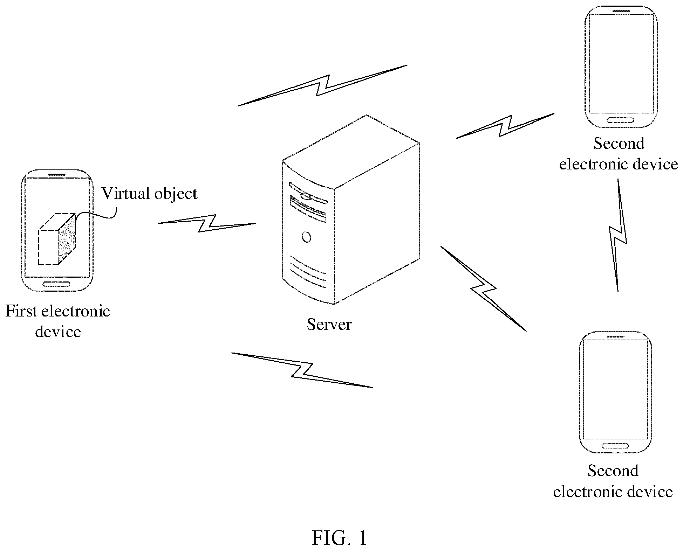

FIG. 1 is a schematic diagram of an application architecture according to an embodiment of this application. As shown in FIG. 1, the application architecture includes a plurality of electronic devices and a server. The plurality of electronic devices may include a first electronic device and one or more second electronic devices (two second electronic devices are used as an example in FIG. 1). The one or more second electronic devices are electronic devices other than the first electronic device. Communication may be performed between the plurality of electronic devices and the server and between the plurality of electronic devices. For example, any device in the application architecture may communicate with another device in a manner such as wireless fidelity (wireless-fidelity, Wi-Fi) communication, Bluetooth communication, or cellular 2nd/3rd/4th/5th generation (2nd/3rd/4th/5th generation, 2G/3G/4G/5G) communication. It should be understood that another communication manner, including a future communication manner, may be further used between the server and the electronic device. This is not specifically limited herein. It should be noted that "one or more second electronic devices" in this embodiment of this application is merely used to represent an electronic device other than the first electronic device, but whether types of the plurality of electronic devices are the same is not limited.

The electronic devices may be various types of devices provided with cameras and display components. For example, the electronic device may be a terminal device such as a mobile phone, a tablet computer, a notebook computer, or a video recorder (a mobile phone is used as an example of the electronic device in FIG. 1). Alternatively, the electronic device may be a device used for interaction in a virtual scenario, including VR glasses, an AR device, an MR interaction device, or the like. Alternatively, the electronic device may be a wearable electronic device such as a smartwatch or a smart band. Alternatively, the electronic device may be a device carried in a carrying device such as a vehicle, an uncrewed vehicle, an uncrewed aerial vehicle, or an industrial robot. A specific form of the electronic device is not specially limited in embodiments of this application.

In addition, the electronic device may also be referred to as user equipment (user equipment, UE), a subscriber station, a mobile unit, a subscriber unit, a wireless unit, a remote unit, a mobile device, a wireless device, a wireless communication device, a remote device, a mobile subscriber station, a terminal device, an access terminal, a mobile terminal, a wireless terminal, a smart terminal, a remote terminal, a handheld terminal, a user agent, a mobile client, a client, or another proper term.

The server may be one or more physical servers (one physical server is used as an example in FIG. 1), or may be a computer cluster, or may be a virtual machine or a cloud server in a cloud computing scenario, or the like.

In this embodiment of this application, a virtual scenario application (application, APP) such as a VR application, an AR application, or an MR application may be installed on the electronic device, and the VR application, the AR application, or the MR application may be run based on a user operation (for example, tap, touch, slide, shake, or voice control). The electronic device may collect visual information of any object in an environment by using a sensor, and then display a virtual object on a display component based on the collected visual information. The virtual object may be a virtual object (namely, an object in a virtual environment) in a VR scenario, an AR scenario, or an MR scenario.

In this embodiment of this application, a navigation, detection, or control application may be installed on the electronic device, and a corresponding application is run based on operations and control of a user or a preset program. The electronic device may perform applications such as route planning, object detection, and carrying device operations and control based on a pose and other status information of the electronic device in a current environment.

The visual information in embodiments of this application includes but is not limited to an image video (without depth information) collected by a camera, an image video (with depth information) collected by a depth sensor (depth sensor), data collected by a lidar (LiDAR), and data collected by a millimeter-wave radar (RaDAR).

It should be noted that, in this embodiment of this application, the virtual scenario application in the electronic device may be an application built in the electronic device, or may be an application that is provided by a third-party service provider and that is installed by the user. This is not specifically limited herein.

In this embodiment of this application, a simultaneous localization and mapping (simultaneous localization and mapping, SLAM) system may be further configured for the electronic device. The SLAM system can create a map in a completely unknown environment, and use the map to perform positioning, pose (location and posture) determining, navigation, and the like. In this embodiment of this application, a map created by the SLAM system is referred to as a SLAM map. The SLAM map may be understood as a map drawn by the SLAM system based on environment information collected by a collection device. The collection device may include a visual information collection apparatus and an inertia measurement unit (inertial measurement unit, IMU) in the electronic device. The visual information collection apparatus may include, for example, a camera, a depth camera, a lidar, and a millimeter-wave radar. The IMU may include, for example, a sensor such as a gyroscope and an accelerometer.

In embodiments of this application, the SLAM map is also referred to as a 3D map. It should be noted that the 3D map includes but is not limited to a SLAM map, and may further include a three-dimensional map created by using another technology. This is not specifically limited in embodiments of this application.

In a possible implementation, the 3D map may include a plurality of 3D map points, and correspondingly, data of the 3D map may include data of the plurality of 3D map points. The 3D map point is a point of interest or a point having a significant feature in an environment.

A possible manner of obtaining a 3D map point is to use a plurality of devices such as a lidar, aerial photography (tilt photography) from an angle of view of an uncrewed aerial vehicle, a high-definition panoramic camera, and a high-definition industrial camera to perform shooting, and extract a 3D map point, from data obtained through shooting by the foregoing devices, by using a method such as oriented features from accelerated segment test (features from accelerated segment test, FAST) and rotated binary robust independent elementary features (binary robust independent elementary features, BRIEF) descriptor features (oriented FAST and rotated BRIEF, ORB), scale-invariant feature transform (scale invariant feature transform, SIFT), and speeded-up robust feature (speeded-up robust feature, SURF), BRIEF, binary robust invariant scalable keypoints (binary robust invariant scalable keypoints, BRISK), fast retinal keypoint (fast retina keypoint, FREAK), or repeatable and reliable detector and descriptor (repeatable and reliable detector and descriptor, R2D2).

Data of a 3D map point may include the following.

### (1) 3D map point descriptor

A 3D map point descriptor is a vector used to represent a local feature of a 3D map point. In a visual positioning algorithm, a 3D map point descriptor is used for matching between 3D map points. A possible method is: calculating a distance (which may be a Euclidean distance, an inner product distance, a Hamming distance, or the like) between two 3D map point descriptors; and when the distance is less than a threshold, considering that the two 3D map points match.

### (2) 3D map point spatial location

A 3D map point spatial location may be represented by using X, Y, and Z on three-dimensional spatial axes, or may be represented by using a longitude, a latitude, and an altitude, or may be represented by using polar coordinates or the like. A method for representing a 3D map point spatial location is not specifically limited in embodiments of this application. The 3D map point spatial location may be an absolute location of a 3D map point or a relative location of a 3D map point. For example, a central location of an entire area is used as an origin, and all 3D map point spatial locations are offset locations relative to a spatial location of the origin.

In embodiments of this application, a number may be allocated to each 3D map point and written into data of the 3D map, or a storage sequence of a plurality of 3D map points in a memory may be used to implicitly indicate numbers of the 3D map points. It should be noted that the sequence of the plurality of 3D map points included in the 3D map is meaningless. Therefore, the foregoing numbers may be considered as identifiers used to identify the 3D map points, to distinguish between the 3D map points. However, the numbers are not intended to limit the sequence of the plurality of 3D map points. For example, a 3D map includes three 3D map points whose numbers are respectively 1, 2, and 3, and the three 3D map points may be processed in an order of 1, 2, and 3, or in an order of 3, 2, and 1, or in an order of 2, 1, and 3, or the like.

In a possible implementation, the data of the 3D map further includes a plurality of area descriptors, and any one of the plurality of area descriptors describes features of a part of or all 3D map points of the plurality of 3D map points. To be specific, for any one of the plurality of area descriptors, the area descriptor may describe features of a part of or all 3D map points of the plurality of 3D map points. In this case, the area descriptor and the 3D map point are in a one-to-many relationship. A feature of each of the plurality of 3D map points may be described by a part of or all area descriptors of the plurality of area descriptors. In this case, the 3D map point and the area descriptor are in a one-to-many relationship. It can be learned that a plurality of area descriptors and a plurality of 3D map points are in a many-to-many relationship. A method for generating an area descriptor includes but is not limited to a conventional method such as a bag of words (bag of words, BOW) and a vector of locally aggregated descriptor (vector of locally aggregated descriptor, VLAD), and a novel method based on NetVLAD or artificial intelligence (artificial intelligence, AI). Similarly, a plurality of area descriptors may be identified by numbers to distinguish between the plurality of area descriptors. Similarly, however, the numbers are not intended to limit a sequence of the plurality of area descriptors.

In a possible implementation, the data of the 3D map further includes a correspondence between a 3D map point and an area descriptor. The correspondence clearly describes which 3D map points any area descriptor corresponds to and which area descriptors any 3D map point corresponds to.

Optionally, the foregoing correspondence may be explicitly described by using a correspondence table between a number of an area descriptor and a number of a 3D map point. For example, the 3D map includes three area descriptors whose numbers are T1 to T3, and six 3D map points whose numbers are P1 to P6. The correspondence table is shown in Table 1 or Table 2.

**Table 1**

| Number of area descriptor | Number of 3D map point |
|---|---|
| T1 | P1 |
| | P2 |
| | P3 |
| T2 | P2 |
| | P3 |
| T3 | P3 |
| | P4 |
| | P5 |
| | P6 |

It should be noted that, Table 1 is an example of a correspondence table between a number of an area descriptor and a number of a 3D map point. The correspondence table may alternatively be presented in another format or manner. This is not specifically limited in this application.

Optionally, the foregoing correspondence may alternatively be implicitly described by using storage locations of an area descriptor and a 3D map point. For example, T1 is first stored in the memory, and then data of P1, P2, and P3 is stored; then T2 is stored, and then data of P2 and P3 is stored; and finally, T3 is stored, and then data of P3, P4, P5, and P6 is stored.

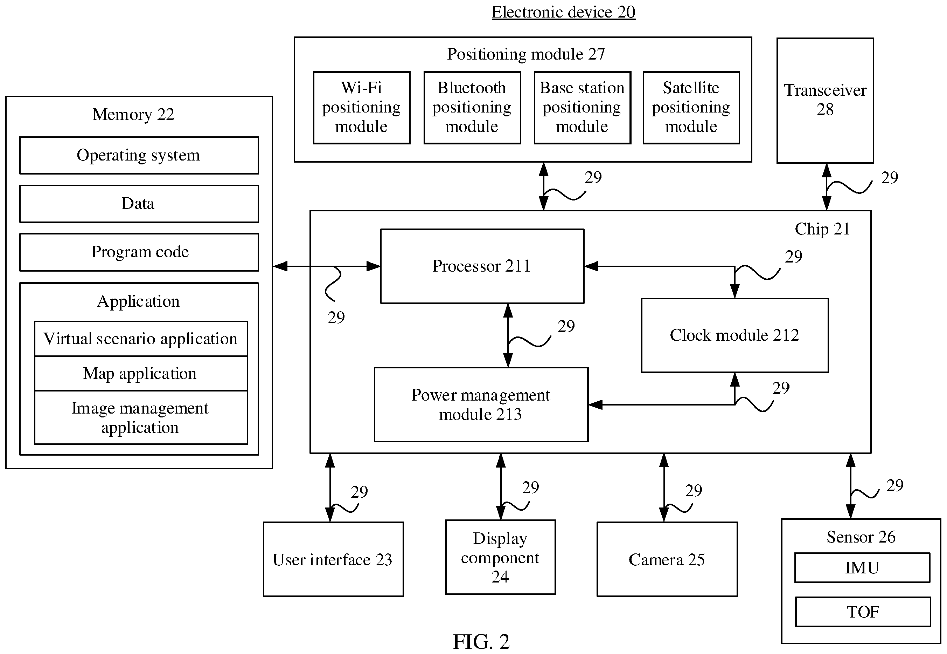

FIG. 2 is a schematic diagram of a structure of an electronic device 20 according to an embodiment of this application. As shown in FIG. 2, the electronic device 20 may be at least one of the first electronic device and one or more second electronic devices in the embodiment shown in FIG. 1. It should be understood that the structure shown in FIG. 2 does not constitute a specific limitation on the electronic device 20. In some other embodiments of this application, the electronic device 20 may include more or fewer components than those shown in FIG. 2, or combine some components, or split some components, or have different component arrangements. The components shown in FIG. 2 may be implemented in hardware including one or more signal processing and/or application-specific integrated circuits, software, or a combination of hardware and software.

The electronic device 20 may include a chip 21, a memory 22 (one or more computer-readable storage media), a user interface 23, a display component 24, a camera 25, a sensor 26, a positioning module 27 configured to perform device positioning, and a transceiver 28 configured to perform communication. These components may communicate with each other by using one or more buses 29.

One or more processors 211, a clock module 212, and a power management module 213 may be integrated into the chip 21. The clock module 212 integrated in the chip 21 is mainly configured to provide a timer required for data transmission and timing control for the processor 211. The timer may implement clock functions of data transmission and timing control. The processor 211 may execute an operation and generate an operation control signal based on an instruction operation code and a timing signal, to complete control of instruction fetching and instruction execution. The power management module 213 integrated in the chip 21 is mainly configured to provide a stable and high-precision voltage for the chip 21 and another component of the electronic device 20.

The processor 211 may also be referred to as a central processing unit (central processing unit, CPU). The processor 211 may specifically include one or more processing units. For example, the processor 211 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural processing unit (neural-network processing unit, NPU), and/or the like. Different processing units may be independent components, or may be integrated into one or more processors.

In a possible implementation, the processor 211 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The memory 22 may be connected to the processor 211 through the bus 29, or may be coupled to the processor 311, and is configured to store various software programs and/or a plurality of groups of instructions. The memory 22 may include a high-speed random access memory (for example, a cache), or may include a nonvolatile memory, for example, one or more magnetic disk storage devices, a flash memory device, or another nonvolatile solid-state storage device. The memory 22 may store an operating system, for example, an embedded operating system such as Android (Android), an Apple mobile platform (iOS), a Microsoft window operating system (Windows), or a UNIX-like operating system (Linux). The memory 22 may further store data, for example, image data, point cloud data, 3D map data, pose data, coordinate system conversion information, and map update information. The memory 22 may further store computer-executable program code. The computer-executable program code includes instructions, for example, communication program instructions and related program instructions of a SLAM system. The memory 22 may further store one or more applications, for example, a virtual scenario application such as AR/VR/MR, a map application, an image management application, and a navigation and control application. The memory 22 may further store a user interface program. The user interface program may vividly display content of an application, for example, a virtual object in a virtual scenario such as AR/VR/MR, by using a graphical operation interface, present the content by using the display component 24, and receive a control operation performed by a user on the application by using an input control such as a menu, a dialog box, or a button.

The user interface 23 may be, for example, a touch panel. The touch panel may detect an instruction of an operation performed by the user on the touch panel. The user interface 23 may be, for example, a keypad, a physical button, or a mouse.

The electronic device 20 may include one or more display components 24. The electronic device 20 may implement a display function jointly by using the display component 24, a graphics processing unit (GPU) and an application processor (AP) in the chip 21, and the like. The GPU is a microprocessor for implementing image processing, and is connected to the display component 24 and the application processor. The GPU performs mathematical and geometric calculation for graphics rendering. The display component 24 may display interface content output by the electronic device 20, for example, display an image, a video, and the like in a virtual scenario such as AR/VR/MR. The interface content may include an interface of a running application, a system-level menu, and the like, and may specifically include the following interface elements: input interface elements, such as a button (Button), a text input box (Text), a scrollbar (Scrollbar), and a menu (Menu); and output interface elements, such as a window (Window), a label (Label), an image, a video, and an animation.

The display component 24 may be a display panel, a lens (for example, VR glasses), a projection screen, or the like. The display panel may also be referred to as a display screen, for example, may be a touchscreen, a flexible screen, a curved screen, or the like, or may be another optical component. It should be understood that the display screen of the electronic device in embodiments of this application may be a touchscreen, a flexible screen, a curved screen, or a screen in another form. In other words, the display screen of the electronic device has a function of displaying an image, and a specific material and shape of the display screen are not specifically limited.

For example, when the display component 24 includes a display panel, the display panel may use a liquid crystal display (liquid crystal display, LCD), an organic light-emitting diode (organic light-emitting diode, OLED), an active matrix organic light-emitting diode or an active-matrix organic light-emitting diode (active-matrix organic light-emitting diode, AMOLED), a flexible light-emitting diode (flexible light-emitting diode, FLED), a MiniLed, a MicroLed, a Micro-oLed, a quantum dot light-emitting diode (quantum dot light-emitting diode, QLED), or the like. In addition, in a possible implementation, the touch panel in the user interface 23 may be coupled to the display panel in the display component 24. For example, the touch panel may be disposed below the display panel, the touch panel is configured to detect touch pressure that acts on the display panel when the user enters a touch operation (for example, tap, slide, or touch) by using the display panel, and the display panel is configured to display content.

The camera 25 may be a monocular camera, a binocular camera, or a depth camera, and is configured to photograph/record an environment to obtain an image/video image. The image/video image collected by the camera 25 may be, for example, used as input data of the SLAM system, or an image/video may be displayed by using the display component 24.

In a possible implementation, the camera 25 may also be considered as a sensor. The image collected by the camera 25 may be in an IMG format, or may be in another format type. This is not specifically limited in embodiments of this application.

The sensor 26 may be configured to collect data related to a status change (for example, rotation, swing, movement, or jitter) of the electronic device 20. The data collected by the sensor 26 may be used as input data of the SLAM system. The sensor 26 may include one or more sensors, for example, an inertia measurement unit (inertial measurement unit, IMU) and a time of flight (time of flight, TOF) sensor. The IMU may include sensors such as a gyroscope and an accelerometer. The gyroscope is configured to measure an angular velocity of the electronic device when the electronic device moves, and the accelerometer is configured to measure acceleration of the electronic device when the electronic device moves. The TOF sensor may include an optical transmitter and an optical receiver. The optical transmitter is configured to emit light outward, for example, laser light, an infrared ray, or a radar wave. The optical receiver is configured to detect reflected light, for example, reflected laser light, an infrared ray, or a radar wave.

It should be noted that the sensor 26 may further include more other sensors, such as an inertia sensor, a barometer, a magnetometer, and a wheel speedometer. This is not specifically limited in embodiments of this application.

The positioning module 27 is configured to implement physical positioning of the electronic device 20, for example, configured to obtain an initial location of the electronic device 20. The positioning module 27 may include one or more of a Wi-Fi positioning module, a Bluetooth positioning module, a base station positioning module, and a satellite positioning module. A global navigation satellite system (global navigation satellite system, GNSS) may be disposed in the satellite positioning module to assist in positioning. The GNSS is not limited to a BeiDou system, a Global Positioning System (global positioning system, GPS) system, a GLONASS (global navigation satellite system, GLONASS) system, and a Galileo Navigation Satellite System (Galileo) system.

The transceiver 28 is configured to implement communication between the electronic device 20 and another device (for example, a server or another electronic device). The transceiver 28 integrates a transmitter and a receiver, which are respectively configured to send and receive a radio frequency signal. In specific implementation, the transceiver 28 includes but is not limited to an antenna system, a radio frequency (radio frequency, RF) transceiver, one or more amplifiers, a tuner, one or more oscillators, a digital signal processor, a codec (CODEC) chip, a subscriber identity module (subscriber identity module, SIM) card, a storage medium, and the like. In a possible implementation, the transceiver 28 may be alternatively implemented on a separate chip. The transceiver 28 supports at least one data network communication in at least one data network of 2G/3G/4G/5G or the like, and/or supports at least one of the following short-range wireless communication manners: Bluetooth (Bluetooth, BT) communication, Wireless Fidelity (wireless fidelity, Wi-Fi) communication, near-field communication (near-field communication, NFC), infrared (infrared, IR) wireless communication, ultra-wideband (ultra-wideband, UWB) communication, and ZigBee (ZigBee) protocol communication.

In this embodiment of this application, the processor 211 runs program code stored in the memory 22, to perform various function applications and data processing of the electronic device 20.

FIG. 3 is a schematic diagram of a structure of a server 30 according to an embodiment of this application. As shown in FIG. 3, the server 30 may be the server in the embodiment shown in FIG. 1. The server 30 includes a processor 301, a memory 302 (one or more computer-readable storage media), and a transceiver 303. These components may communicate with each other by using one or more buses 304.

The processor 301 may be one or more CPUs. When the processor 301 is one CPU, the CPU may be a single-core CPU, or may be a multi-core CPU.

The memory 302 may be connected to the processor 301 through the bus 304, or may be coupled to the processor 301, and is configured to store various program code and/or a plurality of groups of instructions and data (for example, map data and pose data). In specific implementation, the memory 302 includes but is not limited to a random access memory (Random Access Memory, RAM), a read-only memory (Read-Only Memory, ROM), an erasable programmable read-only memory (Erasable Programmable Read-Only Memory, EPROM), a portable read-only memory (Compact Disc Read-Only Memory, CD-ROM), or the like.

The transceiver 303 mainly integrates a receiver and a transmitter. The receiver is configured to receive data (for example, a request or an image) sent by an electronic device, and the transmitter is configured to send data (for example, map data or pose data) to the electronic device.

It should be understood that the server 30 shown in FIG. 3 is merely an example provided in this embodiment of this application, and the server 30 may further have more components than those shown in the figure. This is not specifically limited in embodiments of this application.

In this embodiment of this application, the processor 301 runs program code stored in the memory 302, to perform various function applications and data processing of the server 30.

The term "coupling" used in embodiments of this application means a direct connection or a connection through one or more intermediate components or circuits.

FIG. 4a is a schematic diagram of an application scenario according to an embodiment of this application. As shown in FIG. 4a, in the application scenario, an electronic device collects visual information by using a sensor, and determines a current pose of the electronic device with reference to the visual information and a 3D map from a server.

The 3D map is provided by the server. To be specific, the server creates the 3D map, then compresses the 3D map, and transmits compressed data of the 3D map to the electronic device. After receiving the compressed data of the 3D map, the electronic device performs decompression to obtain reconstructed data of the 3D map, and determines the current pose of the electronic device with reference to the collected visual information and the 3D map. The pose is location information of the electronic device, and may be an absolute pose in the world coordinate system, or may be a relative pose relative to a point in an environment.

In this embodiment of this application, the server may create the 3D map in advance, compress the 3D map, and then store compressed data of the 3D map locally. In this way, storage space can be saved. In addition, the server may transmit the compressed data of the 3D map to another device, for example, a cloud storage.
1. The server creates the 3D map, compresses the 3D map to obtain the compressed data of the 3D map, and stores the compressed data locally.
   The server compresses the 3D map, to save local storage space.
2. The electronic device sends a map download request to the server. The map download request is triggered in two manners:
   (1) A user starts a map application installed on the electronic device, and the application uploads, to a server corresponding to the application, location information obtained based on GPS positioning or Wi-Fi positioning. The upload operation may trigger a map download request. Because uploaded content includes the location information, the server may perform preliminary estimation based on the location information, and transmit, to the electronic device, compressed data of a 3D map of an area to which a positioning point indicated by the location information belongs. A range of the area to which the positioning point indicated by the location information belongs may be preset. For example, the area to which the positioning point belongs may be an administrative region (including a county, a city, a country, or an administrative region) at any level in which the positioning point is located, or may be a circular area centered on the positioning point and using a specified distance as a radius.
   (2) The user starts a map application installed on the electronic device, and actively enters or selects an area on the application. For example, the user actively enters "xx business center", or selects "street A" from a list of "street A, street B, and street C". The foregoing operations of the user may trigger a map download request. Regardless of whether the user enters or selects a geographical location, the server accordingly transmits compressed data of a 3D map of the geographical location to the electronic device.

   It should be understood that, in this embodiment of this application, in addition to the foregoing two manners, another manner may be used for triggering a map download request. For example, the electronic device automatically detects whether a condition for downloading a 3D map or starting downloading a 3D map is satisfied, or the electronic device starts downloading a 3D map upon detecting an ambient light change or an environment change, to request downloading of a 3D map of an area range from the server. A size of the area range is not specifically limited.
3. The server sends the compressed data of the 3D map to the electronic device.
4. The electronic device collects the visual information.
   It should be noted that step 3 and step 4 are independent of each other, and a sequence is not limited.
5. The electronic device decompresses the compressed data of the 3D map to obtain the reconstructed data of the 3D map.
6. The electronic device performs positioning in the 3D map based on the visual information, to obtain a pose corresponding to the visual information.

After receiving the compressed data of the 3D map, the electronic device does not need to immediately decompress the compressed data, and needs to decompress the compressed data to obtain the reconstructed data of the 3D map only before performing positioning based on the visual information. For example, the user may pre-download compressed data of a 3D map of an area range by downloading an "offline map", and decompress the compressed data of the 3D map only when positioning is required.

FIG. 4b is a schematic diagram of an application scenario according to an embodiment of this application. As shown in FIG. 4b, in the application scenario, an electronic device collects visual information by using a sensor, and a server determines a current pose of the electronic device with reference to the visual information from the electronic device and a 3D map.

The 3D map is provided by the server. To be specific, the server creates the 3D map, then compresses the 3D map, and stores compressed data of the 3D map locally. When receiving the visual information from the electronic device, the server performs decompression to obtain reconstructed data of the 3D map, and determines the current pose of the electronic device with reference to the visual information and the 3D map.
1. The server creates the 3D map, compresses the 3D map to obtain the compressed data of the 3D map, and stores the compressed data locally.
2. The electronic device collects the visual information.
3. The electronic device sends the visual information to the server.
4. The server decompresses the compressed data of the 3D map to obtain the reconstructed data of the 3D map.
   It should be understood that the server compresses the 3D map to save storage space.
5. The server performs positioning in the 3D map based on the visual information, to obtain a pose corresponding to the visual information.
6. The server sends the pose to the electronic device.

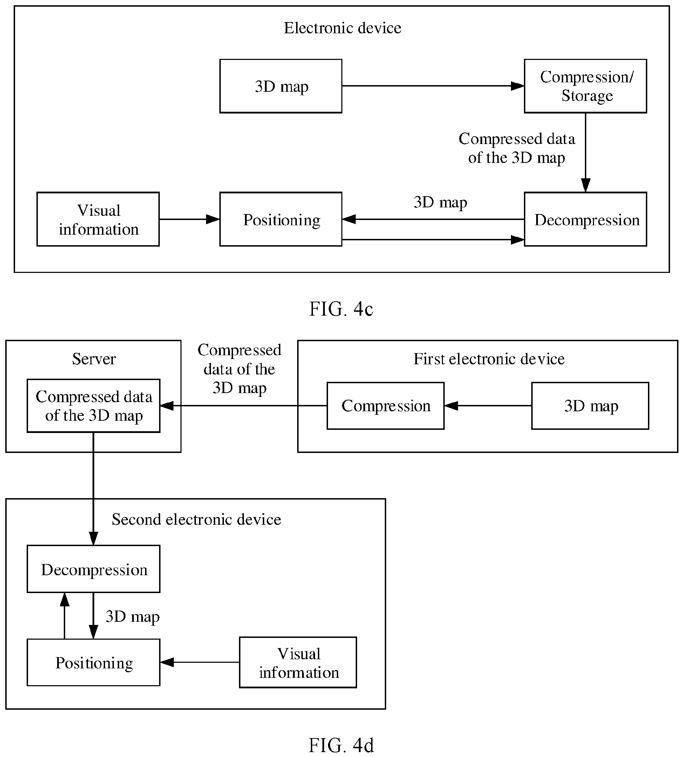

FIG. 4c is a schematic diagram of an application scenario according to an embodiment of this application. As shown in FIG. 4c, in the application scenario, an electronic device collects visual information by using a sensor, and determines a current pose of the electronic device with reference to the visual information and a 3D map.

The 3D map is provided by the electronic device. To be specific, the electronic device creates the 3D map, then compresses the 3D map, and stores compressed data of the 3D map locally. When the visual information is collected, the electronic device performs decompression to obtain reconstructed data of the 3D map, and determines the current pose of the electronic device with reference to the collected visual information and the 3D map.
1. The electronic device creates the 3D map, compresses the 3D map to obtain the compressed data of the 3D map, and stores the compressed data locally.
   It should be understood that the electronic device compresses the 3D map to save storage space.
2. The electronic device collects the visual information by using the sensor.
3. The electronic device decompresses the compressed data of the 3D map to obtain the reconstructed data of the 3D map.
4. The electronic device performs positioning in the 3D map based on the visual information, to obtain a pose corresponding to the visual information.

FIG. 4d is a schematic diagram of an application scenario according to an embodiment of this application. As shown in FIG. 4b, in the application scenario, a second electronic device collects visual information by using a sensor, and determines a current pose of the second electronic device with reference to the visual information and a 3D map from a server.

The 3D map is created by the first electronic device. To be specific, the first electronic device creates the 3D map, compresses the 3D map, and then sends compressed data of the 3D map to the server. The server then sends the compressed data of the 3D map to the second electronic device. The second electronic device performs decompression to obtain reconstructed data of the 3D map, and determines the current pose of the second electronic device with reference to the collected visual information and the 3D map.

In this embodiment of this application, the first electronic device may create the 3D map in advance, compress the 3D map, and then transmit the compressed data of the 3D map to the server. In this way, transmission bandwidth can be reduced.
1. The first electronic device creates the 3D map, compresses the 3D map to obtain the compressed data of the 3D map.
2. The first electronic device sends the compressed data of the 3D map to the server.
   The first electronic device compresses the 3D map and then transmits the compressed data of the 3D map, to reduce transmission bandwidth and improve transmission efficiency.
3. The second electronic device sends a map download request to the server.
   The second electronic device may send the map download request based on a trigger manner shown in FIG. 4a.
4. The server sends the compressed data of the 3D map to the second electronic device.
5. The second electronic device decompresses the compressed data of the 3D map to obtain the reconstructed data of the 3D map.
6. The second electronic device collects the visual information by using the sensor.
7. The second electronic device performs positioning in the 3D map based on the visual information, to obtain a pose corresponding to the visual information.

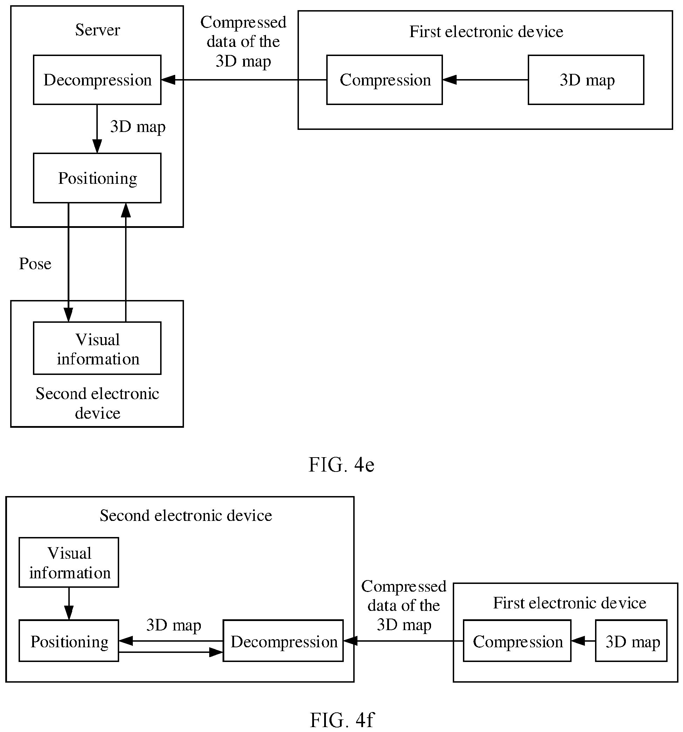

FIG. 4e is a schematic diagram of an application scenario according to an embodiment of this application. As shown in FIG. 4c, in the application scenario, a second electronic device collects visual information by using a sensor, and a server determines a current pose of the second electronic device with reference to the visual information from the second electronic device and a 3D map from a first electronic device.

The 3D map is created by the first electronic device. To be specific, the first electronic device creates the 3D map, compresses the 3D map, and then sends compressed data of the 3D map to the server. The server performs decompression to obtain reconstructed data of the 3D map, and determines the current pose of the second electronic device with reference to the visual information from the second electronic device and the 3D map.
1. The first electronic device creates the 3D map, compresses the 3D map to obtain the compressed data of the 3D map.
2. The first electronic device sends the compressed data of the 3D map to the server.
3. The second electronic device collects the visual information by using the sensor.
4. The second electronic device sends a positioning request to the server, where the positioning request carries the visual information.
5. The server decompresses the compressed data of the 3D map to obtain the reconstructed data of the 3D map.
6. The server performs positioning in the 3D map based on the visual information, to obtain a pose corresponding to the visual information.
7. The server sends, to the second electronic device, the pose obtained through positioning.

FIG. 4f is a schematic diagram of an application scenario according to an embodiment of this application. As shown in FIG. 4d, in the application scenario, a second electronic device collects visual information by using a sensor, and determines a current pose of the second electronic device with reference to the visual information and a 3D map from a first electronic device.

The 3D map is created by the first electronic device. To be specific, the first electronic device creates the 3D map, compresses the 3D map, and then sends compressed data of the 3D map to the second electronic device. The second electronic device performs decompression to obtain reconstructed data of the 3D map, and determines the current pose of the second electronic device with reference to the collected visual information and the 3D map from the first electronic device.
1. The first electronic device creates the 3D map, compresses the 3D map to obtain the compressed data of the 3D map, and stores the compressed data locally.
2. The second electronic device sends a map download request to the first electronic device.
3. The first electronic device sends the compressed data of the 3D map to the second electronic device.
4. The second electronic device decompresses the compressed data of the 3D map to obtain the reconstructed data of the 3D map.
5. The second electronic device collects the visual information by using the sensor.
6. The second electronic device performs positioning in the 3D map based on the visual information, to obtain a pose corresponding to the visual information.
   A positioning algorithm used in the embodiments shown in FIG. 4a to FIG. 4f may include the following.
   (1) A to-be-retrieved area descriptor is extracted from the visual information, where an algorithm used for extracting the to-be-retrieved area descriptor is consistent with an algorithm for extracting an area descriptor from the 3D map.
   (2) A to-be-retrieved 3D map point is extracted from the visual information, and a to-be-retrieved 3D map point spatial location and a to-be-retrieved 3D map point descriptor are obtained, where an algorithm for extracting the to-be-retrieved 3D map point descriptor is consistent with an algorithm for extracting a 3D map point descriptor from the 3D map.
   (3) Retrieval is performed in a plurality of area descriptors included in data of the 3D map based on the to-be-retrieved area descriptor, to obtain a plurality of candidate area descriptors.
      In embodiments of this application, a distance between the to-be-retrieved area descriptor and each area descriptor in the plurality of area descriptors may be calculated. The distance may include a Hamming distance, a Manhattan distance, a Euclidean distance, or the like. Then, at least one area descriptor that satisfies a condition (for example, the distance is less than a threshold) is selected as a candidate area descriptor.
   (4) Matching is separately performed between the to-be-retrieved 3D map point descriptor and 3D map point descriptors corresponding to a plurality of candidate area descriptors. The matching is to separately calculate a similarity between the to-be-retrieved 3D map point descriptor and the 3D map point descriptors corresponding to the plurality of candidate area descriptors, to find a most similar 3D map point.
   (5) The pose of the electronic device is calculated based on the found 3D map point by using a pose solution algorithm such as perspective-n-point (perspective-n-point, PnP) camera pose estimation and efficient perspective-n-point camera pose estimation (efficient perspective-n-point camera pose estimation, EPnP).

The embodiments shown in FIG. 4a to FIG. 4f are all related to compression of the 3D map. Embodiments of this application provide a plurality of apparatus frameworks for performing the foregoing compression. The following describes the plurality of apparatus frameworks.

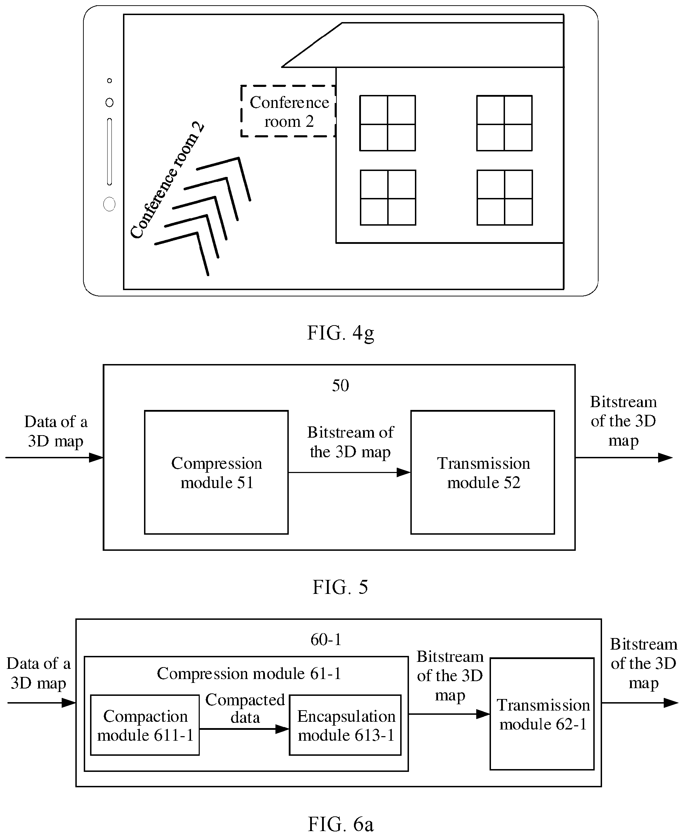

In any one of the application scenarios in FIG. 4a to FIG. 4f, positioning is performed based on the 3D map in embodiments of this application, to obtain the current pose of the electronic device. The pose may be applied to fields such as AR navigation, AR human-computer interaction, assisted driving, and autonomous driving. For example, AR navigation based on the pose is used as an example. FIG. 4g is a schematic diagram of a user interface displayed by an electronic device according to an embodiment of this application. The electronic device may display, based on the pose, the user interface shown in FIG. 4g. The user interface may include a navigation arrow indication for navigation to a conference room 2, and the navigation arrow indication headed to the conference room 2 may be a virtual object obtained from a server based on the pose or obtained locally based on the pose. The user interface may further include visual information collected by a sensor, for example, a building shown in FIG. 4g. The user goes to the conference room 2 with reference to the user interface of the electronic device shown in FIG. 4g.

It should be noted that reconstructed data, obtained through decompression, of a 3D map in embodiments of this application may also be referred to as reconstructed data of the 3D map.

FIG. 5 is a diagram of a structure of an apparatus 50 for encoding a 3D map according to an embodiment of this application. As shown in FIG. 5, the encoding apparatus 50 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

The apparatus 50 for encoding a 3D map in this embodiment of this application includes a compression module 51 and a transmission module 52. The compression module 51 is configured to compress to-be-encoded data of a 3D map to obtain a bitstream of the 3D map, where the 3D map includes a plurality of 3D map points, and the data of the 3D map includes data of the plurality of 3D map points. The transmission module 52 is configured to transmit the bitstream of the 3D map. It can be learned that input data of the compression module 51 is the data of the 3D map, output data is the bitstream of the 3D map, and data transmitted by the transmission module 52 is the bitstream of the 3D map output by the compression module 51.

The compression module 51 may perform compression on data of a 3D map, to reduce a data volume of the 3D map. In a scenario in which a 3D map needs to be transmitted, transmitting compressed data of the 3D map instead of transmitting original data of the 3D map can reduce a data volume for transmission, for example, can compress the data volume from a TB level to a GB level, and can further reduce bandwidth occupied by the transmission, thereby improving transmission efficiency of the 3D map.

It should be noted that, in this embodiment of this application, the compression may include at least one of compaction and prediction, and the compaction may include at least one of quantization and binarization.

Quantization means mapping to-be-processed data to one or more quantization indexes, where each quantization index corresponds to one quantization center. A quantity of bits in the quantization index is usually obviously less than a quantity of bits in original data, to save storage or transmission bandwidth. Quantization methods include but are not limited to scalar quantization, vector quantization, product quantization, and the like.

Binarization means processing to-be-processed data into a binary string represented by a binary symbol. The binarization may be, for example, hashing. The principle of the hashing is to map to-be-processed data to a Hamming space (a binary space), to generate a binary hash code. A quantity of bits in a hash code is usually obviously less than a quantity of bits in original data, to save storage and transmission bandwidth. In addition, a calculation amount of a Hamming distance between hash codes is usually less than that of a Euclidean distance of the original data, thereby reducing calculation complexity. Hashing methods include but are not limited to: an iterative quantization (iterative quantization, ITQ) hash method, a locality sensitive hashing (locality sensitive hashing, LSH) method, and the like.

Prediction means performing prediction on to-be-processed data by using processed data, to obtain residual data of the to-be-processed data. Apparently, a data volume of the residual data is less than an original data volume, so as to implement data compression. Selection of reference data may be pre-agreed. For example, previously processed data is fixedly used as the reference data, and in this case, the reference data does not need to be identified in the bitstream. For another example, any processed data is used as the reference data, and in this case, identification information of the reference data needs to be written into the bitstream, and includes a number of the reference data, or other information that can be used to infer the reference data.

In the foregoing description of the data of the 3D map, it can be learned that a sequence of the plurality of 3D map points included in the 3D map is meaningless. Therefore, if compression or encoding of the 3D map point is involved, the sequence of the plurality of 3D map points is not limited, that is, the plurality of 3D map points may be compressed or encoded separately in any sequence.

Based on the principle of prediction, it is considered that if a similarity between prediction data of to-be-processed data and the to-be-processed data is relatively high, there is a relatively high probability that the obtained residual data of the to-be-processed data is 0, so that compression performance can be improved, thereby reducing a data volume for encoding. In this embodiment of this application, a plurality of pieces of to-be-processed data may be reordered before prediction, to improve correlation between adjacent to-be-processed data, thereby further reducing a data volume of the residual data. Optionally, one piece of to-be-processed data may be predicted based on one or more pieces of processed data, to obtain residual data of the to-be-processed data; or a plurality of pieces of to-be-processed data may be predicted based on one or more pieces of processed data, to obtain residual data of the plurality of pieces of to-be-processed data.

In addition, the compression may further include encapsulation, to encapsulate to-be-encoded data into a bitstream. The encapsulation may use any encoding algorithm, for example, entropy encoding. Entropy encoding is a lossless data compression method. Entropy encoding algorithms include but are not limited to: Huffman (huffman) encoding, arithmetic encoding, a compression/decompression algorithm improved based on an LZ77 compression algorithm (lempel-ziv-markov chain-algorithm, LZMA), a function library algorithm for data compression (zlib), and the like.

Based on the embodiment shown in FIG. 5, embodiments of this application provide examples of a plurality of implementable structures of the compression module, and the following embodiments are used for description.

In a possible implementation, FIG. 6a is a diagram of a structure of an apparatus 60-1 for encoding a 3D map according to an embodiment of this application. As shown in FIG. 6a, the encoding apparatus 60-1 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

With reference to the embodiment shown in FIG. 5, in this embodiment of this application, the encoding apparatus 60-1 includes a compression module 61-1 and a transmission module 62-1, and the compression module 61-1 includes a compaction module 611-1 and an encapsulation module 613-1. Details are as follows.

The compaction module 611-1 is configured to perform compaction on input first data to output compacted data of the first data, and the encapsulation module 613-1 is configured to process input third data to output a bitstream of the 3D map.

The first data is data of the 3D map, and the third data is the compacted data of the first data. It can be learned that, input data of the compaction module 611-1 is the data of the 3D map, and output data is compacted data obtained through compaction; and input data of the encapsulation module 613-1 is the compacted data output by the compaction module 611-1, and output of the encapsulation module 613-1 is a bitstream of the 3D map obtained based on the compacted data.

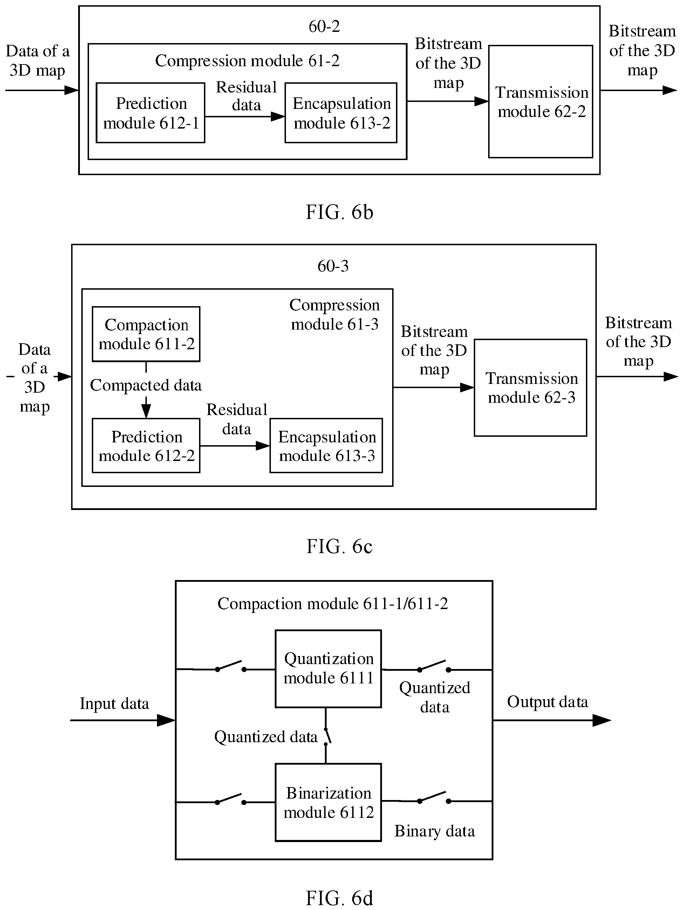

In a possible implementation, FIG. 6b is a diagram of a structure of an apparatus 60-2 for encoding a 3D map according to an embodiment of this application. As shown in FIG. 6b, the encoding apparatus 60-2 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

With reference to the embodiment shown in FIG. 5, in this embodiment of this application, the encoding apparatus 60-2 includes a compression module 61-2 and a transmission module 62-2, and the compression module 61-2 includes a prediction module 612-1 and an encapsulation module 613-2. Details are as follows.

The prediction module 612-1 is configured to perform prediction on input second data to output residual data of the second data, and the encapsulation module 613-2 is configured to process input third data to output a bitstream of the 3D map. Optionally, the prediction module 612-1 is further configured to reorder a plurality of pieces of to-be-processed second data. It should be noted that the reordering is an optional function of the prediction module 612-1, that is, the prediction module 612-1 may directly perform prediction on each piece of the second data of the plurality of pieces of the second data that are randomly sorted, or the prediction module 612-1 may first perform reordering on the plurality of pieces of the second data that are randomly sorted, and then perform prediction on each piece of the second data of the plurality of pieces of the second data based on a result of the reordering.

The second data is data of the 3D map, and the third data is the residual data of the second data. It can be seen that, input data of the prediction module 612-1 is the data of the 3D map, and output data is residual data obtained through prediction; and input data of the encapsulation module 613-2 is the residual data output by the prediction module 612-1, and output of the encapsulation module 613-2 is a bitstream of the 3D map obtained based on the residual data.

In a possible implementation, FIG. 6c is a diagram of a structure of an apparatus 60-3 for encoding a 3D map according to an embodiment of this application. As shown in FIG. 6c, the encoding apparatus 60-3 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

With reference to the embodiment shown in FIG. 5, in this embodiment of this application, the encoding apparatus 60-3 includes a compression module 61-3 and a transmission module 62-3, and the compression module 61-3 includes a compaction module 611-2, a prediction module 612-2, and an encapsulation module 613-3. Details are as follows.

The compaction module 611-2 is configured to perform compaction on input first data to output compacted data of the first data; the prediction module 612-2 is configured to perform prediction on input second data to output residual data of the second data; and the encapsulation module 613-3 is configured to process input third data to output a bitstream of the 3D map.

The first data is data of the 3D map, the second data is the compacted data of the first data, and the third data is the residual data of the second data. It can be learned that, input data of the compaction module 611-2 is the data of the 3D map, and output data is compacted data obtained through compaction; input data of the prediction module 612-2 is the compacted data output by the compaction module 611-2, and output data is residual data obtained through prediction; and input data of the encapsulation module 613-3 is the residual data output by the prediction module 612-2, and output of the encapsulation module 613-3 is a bitstream of the 3D map obtained based on the residual data.

In this embodiment of this application, based on the embodiment shown in FIG. 6a or FIG. 6c, the compaction module 611-1/611-2 may include a quantization module and/or a binarization module.

In a possible implementation, FIG. 6d is a structural diagram of a compaction module 611-1/611-2 according to an embodiment of this application. As shown in FIG. 6d, the compaction module 611-1/611-2 includes a quantization module 6111 and/or a binarization module 6112. The quantization module 6111 is configured to perform quantization on input data to obtain quantized data of the input data, and the binarization module 6112 is configured to perform binarization on input data to obtain binary data of the input data.

Optionally, the compaction module 611-1/611-2 may include only the quantization module 6111. In this case, the input data of the quantization module 6111 may be input data of the compaction module 611-1/611-2, for example, data of a 3D map. Correspondingly, output data of the quantization module 6111 (that is, output data of the compaction module 611-1/611-2) is quantized data of the 3D map.

Optionally, the compaction module 611-1/611-2 may include only the binarization module 6112. In this case, the input data of the binarization module 6112 may be input data of the compaction module 611-1/611-2, for example, data of a 3D map. Correspondingly, output data of the binarization module 6112 (that is, output data of the compaction module 611-1/611-2) is binary data of the 3D map.

Optionally, the compaction module 611-1/611-2 includes the quantization module 6111 and the binarization module 6112. In this case, the input data of the quantization module 6111 may be input data of the compaction module 611-1/611-2, for example, data of a 3D map. The input data of the binarization module 6112 may also be the input data of the compaction module 611-1/611-2, and in this case, output data of the compaction module 611-1/611-2 includes quantized data and binary data of the 3D map. Alternatively, the input data of the quantization module 6111 may be input data of the compaction module 611-1/611-2, for example, data of a 3D map. The input data of the binarization module 6112 may be output data of the quantization module 6111, that is, quantized data of a 3D map. In this case, output data of the compaction module 611-1/611-2 is binary data of the 3D map.

According to the foregoing description of the data of the 3D map, the data of the 3D map may include a plurality of area descriptors and data of a plurality of 3D map points. Therefore, in the embodiments shown in FIG. 6a to FIG. 6d, another module different from the encapsulation module in the compression module may be split into a first module configured to process the area descriptor and a second module configured to process the data of the 3D map point. For example, the compaction module may include a first compaction module and a second compaction module, the prediction module may include a first prediction module and a second prediction module, the quantization module may include a first quantization module and a second quantization module, and the binarization module may include a first binarization module and a second binarization module. A difference of the first module and the second module obtained after the differentiation from the foregoing embodiment lies in that input data of the first module and input data of the second module respectively correspond to the area descriptor and the data of the 3D map point.

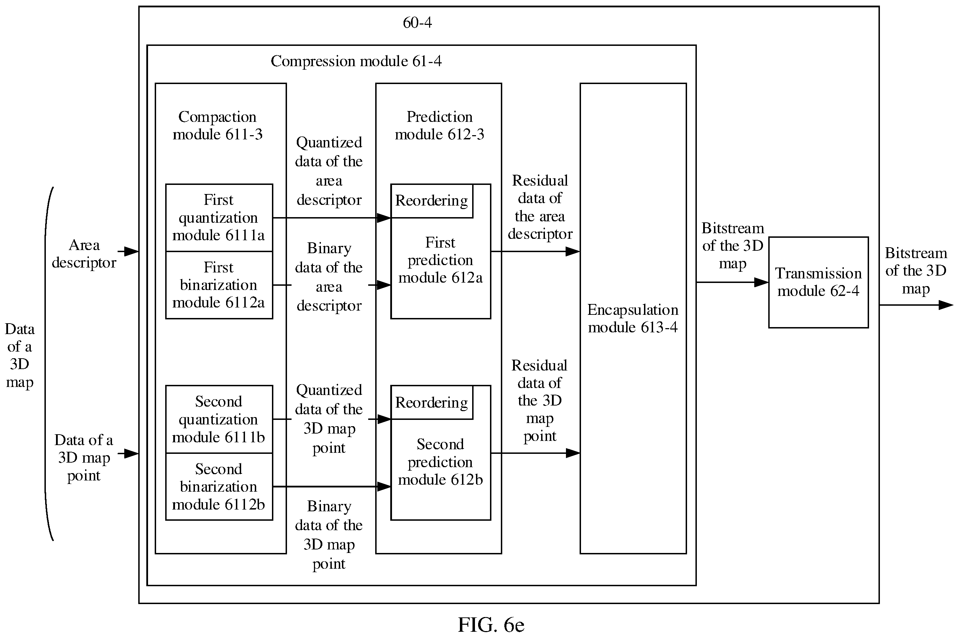

FIG. 6e is a diagram of a structure of an apparatus 60-4 for encoding a 3D map according to an embodiment of this application. As shown in FIG. 6e, the encoding apparatus 60-4 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

With reference to the embodiment shown in FIG. 6c, in this embodiment of this application, the encoding apparatus 60-4 includes a compression module 61-4 and a transmission module 62-4, and the compression module 61-4 includes a compaction module 611-3, a prediction module 612-3, and an encapsulation module 613-4. The compaction module 611-3 includes a first quantization module 6111a, a first binarization module 6112a, a second quantization module 6111b, and a second binarization module 6112b. The prediction module 612-3 includes a first prediction module 612a and a second prediction module 612b, and the first prediction module 612a and the second prediction module 612b may be further configured to implement a reordering function.

Input data of the first quantization module 6111a is an area descriptor, and output data is quantized data of the area descriptor. Input data of the first binarization module 6112a is an area descriptor, and output data is binary data of the area descriptor. Input data of the first prediction module 612a includes the quantized data of the area descriptor and the binary data of the area descriptor, and output data is residual data of the area descriptor. Input data of the second quantization module 6111b is data of a 3D map point, and output data is quantized data of the 3D map point. Input data of the second binarization module 6112b is the data of the 3D map point, and output data is binary data of the 3D map point. Input data of the second prediction module 612b includes the quantized data of the 3D map point and the binary data of the 3D map point, and output data is residual data of the 3D map point.

Based on this, input data of the encapsulation module 613-4 includes the residual data of the area descriptor and the residual data of the 3D map point, and the encapsulation module 613-4 separately performs encapsulation on the residual data of the area descriptor and the residual data of the 3D map point to obtain a bitstream of the 3D map.

The transmission module 62-4 is configured to transmit the bitstream of the 3D map.

It should be noted that FIG. 6e shows an example structure of an apparatus for encoding a 3D map, and the structure is a structure obtained based on content included in the data of the 3D map. However, the structure does not constitute a limitation on the encoding apparatus. The encoding apparatus may include modules more diversified than those in the embodiment shown in FIG. 6e. For example, with reference to the embodiment shown in FIG. 6a or FIG. 6b, another structure is obtained based on content included in the data of the 3D map. In the embodiment shown in FIG. 6d, the quantization module and the binarization module are in an "and/or" relationship, that is, the compression module may include either the quantization module or the binarization module, or may include both the quantization module and the binarization module. When distinguishing is made between the first module and the second module, processing methods may be independently set for a module for processing an area descriptor and a module for processing data of a 3D map point, and do not need to be completely consistent. For example, the area descriptor may be processed by using the first quantization module, the first binarization module, and the first prediction module, and the data of the 3D map point may be processed by using the second quantization module and the second prediction module. In the embodiments shown in FIG. 6a to FIG. 6c, the compaction module and the prediction module are in an "and/or" relationship, that is, the compression module may include either the compaction module or the prediction module, or may include both the compaction module and the prediction module. When distinguishing is made between the first module and the second module, processing methods may be independently set for a module for processing an area descriptor and a module for processing data of a 3D map point, and do not need to be completely consistent. For example, the area descriptor may be processed by using the first compaction module, and the data of the 3D map point may be processed by using the second prediction module. A specific implementation of the compression module is not specifically limited in this application.

According to the foregoing description of the data of the 3D map, the data of the 3D map may include a plurality of area descriptors and a plurality of 3D map point descriptors, and a plurality of 3D map point spatial locations. Therefore, in the embodiments shown in FIG. 6a to FIG. 6d, another module different from the encapsulation module in the compression module may be split into a first module configured to process the area descriptor, a second module configured to process the 3D map point descriptor, and a third module configured to process the 3D map point spatial location. For example, the compaction module may include a first compaction module, a second compaction module, and a third compaction module. The prediction module may include a first prediction module, a second prediction module, and a third prediction module. The quantization module may include a first quantization module, a second quantization module, and a third quantization module. The binarization module may include a first binarization module, a second binarization module, and a third binarization module. A difference of the first module, the second module, and the third module obtained after the differentiation from the foregoing embodiment lies in that input data of the first module, input data of the second module, and input data of the third module respectively correspond to the area descriptor, the 3D map point descriptor, and the 3D map point spatial location.

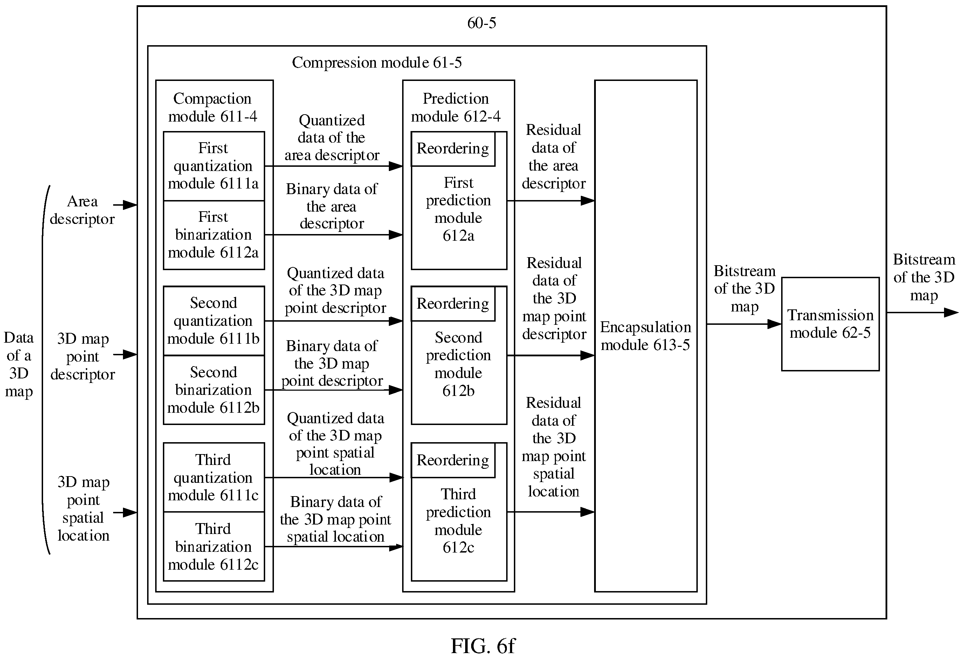

FIG. 6f is a diagram of a structure of an apparatus 60-5 for encoding a 3D map according to an embodiment of this application. As shown in FIG. 6f, the encoding apparatus 60-5 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

With reference to the embodiment shown in FIG. 6c, in this embodiment of this application, the encoding apparatus 60-5 includes a compression module 61-5 and a transmission module 62-5, and the compression module 61-5 includes a compaction module 611-4, a prediction module 612-4, and an encapsulation module 613-5. The compaction module 611-4 includes a first quantization module 6111a, a first binarization module 6112a, a second quantization module 6111b, a second binarization module 6112b, a third quantization module 6111c, and a third binarization module 6112c. The prediction module 612-4 includes a first prediction module 612a, a second prediction module 612b, and a third prediction module 612c. The first prediction module 612a, the second prediction module 612b, and the third prediction module 612c may be further configured to implement a reordering function.

Input data of the first quantization module 6111a is an area descriptor, and output data is quantized data of the area descriptor. Input data of the first binarization module 6112a is an area descriptor, and output data is binary data of the area descriptor. Input data of the first prediction module 612a includes the quantized data of the area descriptor and the binary data of the area descriptor, and output data is residual data of the area descriptor. Input data of the second quantization module 6111b is a 3D map point descriptor, and output data is quantized data of the 3D map point descriptor. Input data of the second binarization module 6112b is a 3D map point descriptor, and output data is binary data of the 3D map point descriptor. Input data of the second prediction module 612b includes the quantized data of the 3D map point descriptor and the binary data of the 3D map point descriptor, and output data is residual data of the 3D map point descriptor. Input data of the third quantization module 6111c is a 3D map point spatial location, and output data is quantized data of the 3D map point spatial location. Input data of the third binarization module 6112b is the 3D map point spatial location, and output data is binary data of the 3D map point spatial location. Input data of the third prediction module 612b includes the quantized data of the 3D map point spatial location and the binary data of the 3D map point spatial location, and output data is residual data of the 3D map point spatial location.

Based on this, input data of the encapsulation module 613-5 includes the residual data of the area descriptor, the residual data of the 3D map point descriptor, and the residual data of the 3D map point spatial location. The encapsulation module 613-5 separately performs encapsulation on the residual data of the area descriptor, the residual data of the 3D map point descriptor, and the residual data of the 3D map point spatial location, to obtain a bitstream of the 3D map.

The transmission module 62-5 is configured to transmit the bitstream of the 3D map.

It should be noted that FIG. 6f shows an example structure of an apparatus 60 for encoding a 3D map, and the structure is a structure obtained based on content included in the data of the 3D map. However, the structure does not constitute a limitation on the encoding apparatus 60. The encoding apparatus 60 may include modules more diversified than those in the embodiment shown in FIG. 6f. For example, with reference to the embodiment shown in FIG. 6a or FIG. 6b, another structure is obtained based on content included in the data of the 3D map. In the embodiment shown in FIG. 6d, the quantization module and the binarization module are in an "and/or" relationship, that is, the compression module may include either the quantization module or the binarization module, or may include both the quantization module and the binarization module. When distinguishing is made between the first module, the second module, and the third module, processing methods may be independently set for a module for processing an area descriptor, a module for processing a 3D map point descriptor, and a module for processing a 3D map point spatial location, and do not need to be completely consistent. In the embodiments shown in FIG. 6a to FIG. 6c, the compaction module and the prediction module are in an "and/or" relationship, that is, the compression module may include either the compaction module or the prediction module, or may include both the compaction module and the prediction module. When distinguishing is made between the first module, the second module, and the third module, processing methods may be independently set for a module for processing an area descriptor, a module for processing a 3D map point descriptor, and a module for processing a 3D map point spatial location, and do not need to be completely consistent.

According to the foregoing description of the data of the 3D map, the data of the 3D map may include a plurality of area descriptors and data of a plurality of 3D map points.

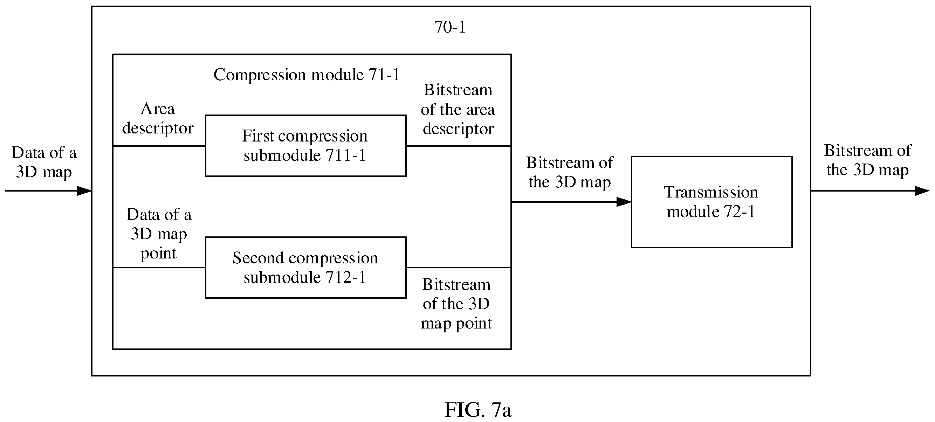

In a possible implementation, FIG. 7a is a diagram of a structure of an apparatus 70-1 for encoding a 3D map according to an embodiment of this application. As shown in FIG. 7a, the encoding apparatus 70-1 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

With reference to the embodiment shown in FIG. 5, in this embodiment of this application, the encoding apparatus 70-1 includes a compression module 71-1 and a transmission module 72-1, and the compression module 71-1 includes a first compression submodule 711-1 and a second compression submodule 712-1. Details are as follows.

The first compression submodule 711-1 is configured to perform compression on input twenty-first data to output a bitstream of the twenty-first data. The second compression submodule 712-1 is configured to perform compression on input twenty-second data to output a bitstream of the twenty-second data.

The twenty-first data is one of the plurality of area descriptors, and the twenty-second data is data of one of the plurality of 3D map points. It can be learned that input data of the first compression submodule 711-1 is an area descriptor, and output data is a bitstream of the area descriptor. Input data of the second compression submodule 712-1 is data of a 3D map point, and output data is a bitstream of the 3D map point. A bitstream of a 3D map includes a bitstream of a plurality of area descriptors and a bitstream of a plurality of 3D map points.

For the first compression submodule 711-1 and the second compression submodule 712-1, refer to the structure of the compression module in the embodiments shown in FIG. 6a to FIG. 6f. It should be noted that the first compression submodule 711-1 and the second compression submodule 712-1 are independent of each other, and may use same structures or different structures. That is, the first compression submodule 711-1 configured to process the area descriptor and the second compression submodule 712-1 configured to process the data of the 3D map point may be of same structures or different structures. Correspondingly, a step of compression performed on the area descriptor may also be the same as or different from a step of compression performed on the data of the 3D map point.

For example, the first compression submodule includes a first compaction module and a first encapsulation module. In this way, after an area descriptor is input to the first compression submodule, the first compaction module first processes the area descriptor to obtain compacted data of the area descriptor, and then the first encapsulation module processes the compacted data to obtain a bitstream of the area descriptor. The second compression submodule includes a second compaction module, a second prediction module, and a second encapsulation module. In this way, after data of a 3D map point is input to the second compression submodule, the second compaction module first processes the data of the 3D map point to obtain compacted data of the 3D map point, then the second prediction module processes the compacted data to obtain residual data of the 3D map point, and then the second encapsulation module processes the residual data to obtain a bitstream of the 3D map point.

For another example, the first compression submodule includes a first quantization module, a first binarization module, a first prediction module, and a first encapsulation module. In this way, after an area descriptor is input to the first compression submodule, the first quantization module processes the area descriptor to obtain quantized data of the area descriptor, the first binarization module processes the area descriptor to obtain binary data of the area descriptor, then the first prediction module processes the quantized data and the binary data to obtain residual data of the area descriptor, and then the first encapsulation module processes the residual data to obtain a bitstream of the area descriptor. The second compression submodule includes a second quantization module, a second prediction module, and a second encapsulation module. In this way, after data of a 3D map point is input to the second compression submodule, the second quantization module first processes the data of the 3D map point to obtain quantized data of the 3D map point, then the second prediction module processes the quantized data to obtain residual data of the 3D map point, and then the second encapsulation module processes the residual data to obtain a bitstream of the 3D map point.

It should be understood that the structures of the first compression submodule and the second compression submodule are described above as an example. However, this does not constitute a limitation on the structures of the first compression submodule and the second compression submodule. The two submodules may include more or fewer modules than those in the example. For details, refer to the structures of the compression module in the embodiments shown in FIG. 6a to FIG. 6f. This is not specifically limited in embodiments of this application.

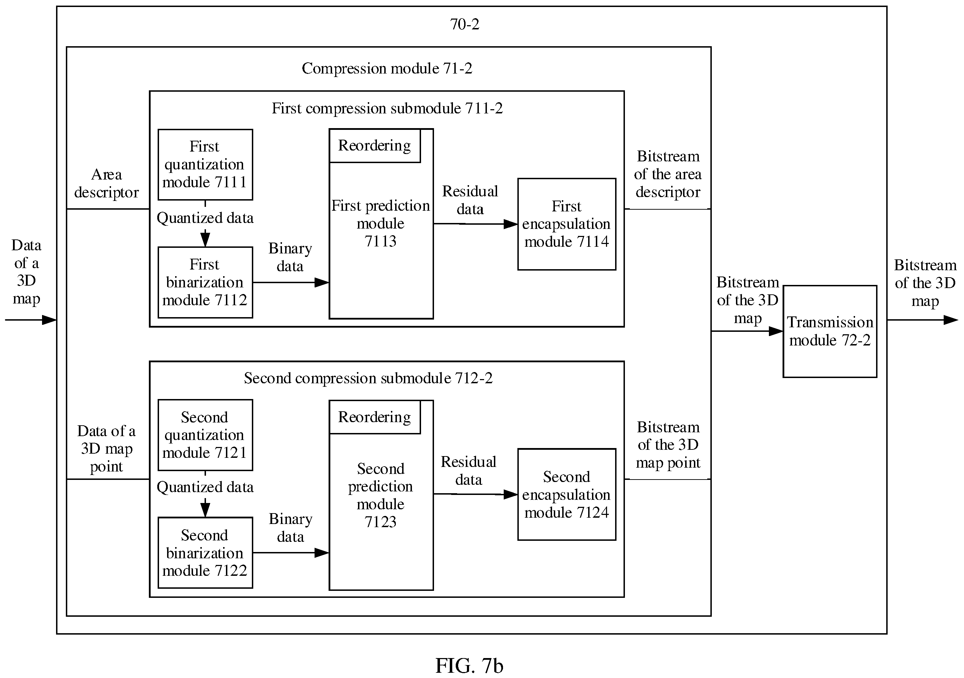

In a possible implementation, FIG. 7b is a diagram of a structure of an apparatus 70-2 for encoding a 3D map according to an embodiment of this application. As shown in FIG. 7b, the encoding apparatus 70-2 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

With reference to the embodiment shown in FIG. 7a, in this embodiment of this application, the encoding apparatus 70-2 includes a compression module 71-2 and a transmission module 72-2. The compression module 71-2 includes a first compression submodule 711-2 and a second compression submodule 712-2. The first compression submodule 711-2 includes a first quantization module 7111, a first binarization module 7112, a first prediction module 7113, and a first encapsulation module 7114. The second compression submodule 712-2 includes a second quantization module 7121, a second binarization module 7122, a second prediction module 7123, and a second encapsulation module 7124. Details are as follows.

The first quantization module 7111 is configured to perform quantization on an input area descriptor to obtain quantized data of the area descriptor. The first binarization module 7112 is configured to perform binarization on input quantized data to obtain binary data of the area descriptor. The first prediction module 7113 is configured to perform prediction on input binary data to obtain residual data of the area descriptor. The first encapsulation module 7114 is configured to encapsulate input residual data to obtain a bitstream of the area descriptor. The second quantization module 7121 is configured to perform quantization on input data of a 3D map point to obtain quantized data of the 3D map point. The second binarization module 7122 is configured to perform binarization on input quantized data to obtain binary data of the 3D map point. The second prediction module 7123 is configured to perform prediction on input binary data to obtain residual data of the 3D map point. The second encapsulation module 7124 is configured to encapsulate input residual data to obtain a bitstream of the 3D map point.

It should be understood that the structures of the first compression submodule and the second compression submodule are described as an example in the embodiment shown in FIG. 7b. However, this does not constitute a limitation on the structures of the first compression submodule and the second compression submodule. The two submodules may include more or fewer modules than those in the example. For details, refer to the structures of the compression module 61 in the embodiments shown in FIG. 6a to FIG. 6f. This is not specifically limited in embodiments of this application.

According to the foregoing description of data of a 3D map, the data of the 3D map may include a plurality of area descriptors, a plurality of 3D map point descriptors and spatial locations.

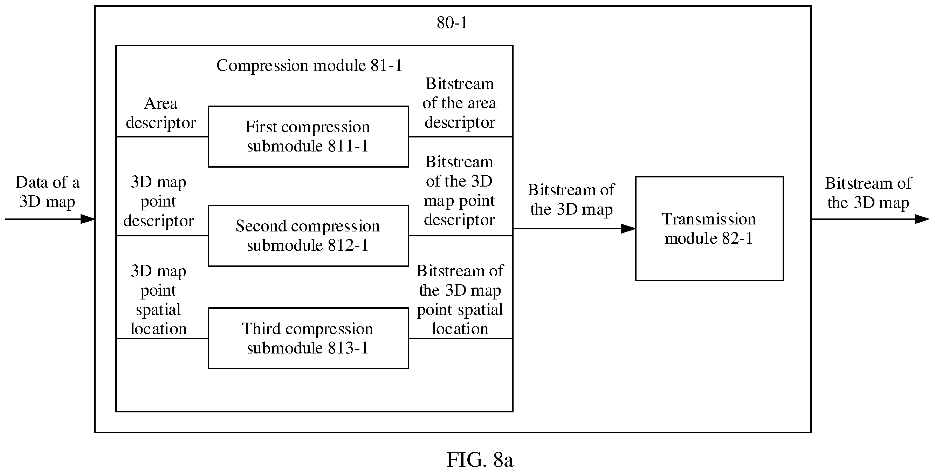

In a possible implementation, FIG. 8a is a diagram of a structure of an apparatus 80-1 for encoding a 3D map according to an embodiment of this application. As shown in FIG. 8a, the encoding apparatus 80-1 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

With reference to the embodiment shown in FIG. 5, in this embodiment of this application, the encoding apparatus 80-1 includes a compression module 81-1 and a transmission module 82-1. The compression module 81-1 includes a first compression submodule 811-1, a second compression submodule 812-1, and a third compression submodule 813-1. Details are as follows.

The first compression submodule 811-1 is configured to compress input twenty-ninth data to output a bitstream of the twenty-ninth data. The second compression submodule 812-1 is configured to compress input thirtieth data to output a bitstream of the thirtieth data. The third compression submodule 813-1 is configured to compress input thirty-first data to output a bitstream of the thirty-first data.

The twenty-ninth data is one of a plurality of area descriptors, the thirtieth data is a 3D map point descriptor of one of a plurality of 3D map points, and the thirty-first data is a spatial location of one of the plurality of 3D map points. It can be learned that input data of the first compression submodule 811-1 is an area descriptor, and output data is a bitstream of the area descriptor; input data of the second compression submodule 812-1 is a 3D map point descriptor, and output data is a bitstream of the 3D map point descriptor; and input data of the third compression submodule 813-1 is a 3D map point spatial location, and output data is a bitstream of the 3D map point spatial location. A bitstream of a 3D map includes a bitstream of a plurality of area descriptors, a bitstream of a plurality of 3D map point descriptors, and a bitstream of a plurality of 3D map point spatial locations.

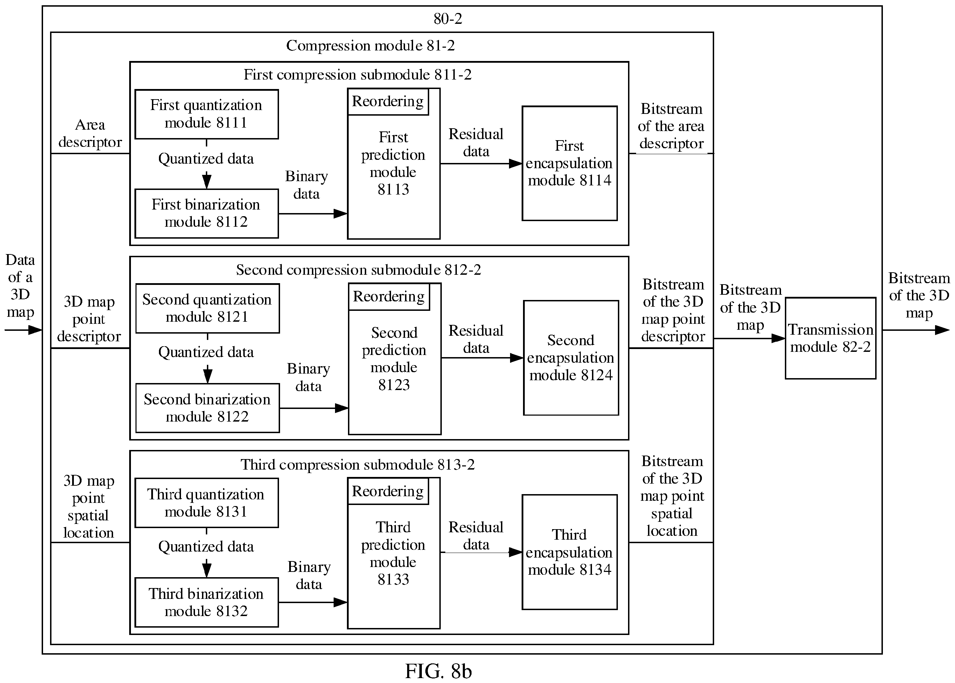

In a possible implementation, FIG. 8b is a diagram of a structure of an apparatus 80-2 for encoding a 3D map according to an embodiment of this application. As shown in FIG. 8b, the encoding apparatus 80-2 may be used in the server or the electronic device in the foregoing embodiment, especially a device that needs to compress and transmit a 3D map, for example, the server in the embodiment shown in FIG. 4a, or the first electronic device in the embodiments shown in FIG. 4d to FIG. 4f.

With reference to the embodiment shown in FIG. 8a, in this embodiment of this application, the encoding apparatus 80-2 includes a compression module 81-2 and a transmission module 82-2. The compression module 81-2 includes a first compression submodule 811-2, a second compression submodule 812-2, and a third compression submodule 813-2. The first compression submodule 811-2 includes a first quantization module 8111, a first binarization module 8112, a first prediction module 8113, and a first encapsulation module 8114. The second compression submodule 812-2 includes a second quantization module 8121, a second binarization module 8122, a second prediction module 8123, and a second encapsulation module 8124. The third compression submodule 813-2 includes a third quantization module 8131, a third binarization module 8132, a third prediction module 8133, and a third encapsulation module 8134. Details are as follows.

The first quantization module 8111 is configured to perform quantization on an input area descriptor to obtain quantized data of the area descriptor. The first binarization module 8112 is configured to perform binarization on input quantized data to obtain binary data of the area descriptor. The first prediction module 8113 is configured to perform prediction on input binary data to obtain residual data of the area descriptor. The first encapsulation module 8114 is configured to encapsulate input residual data to obtain a bitstream of the area descriptor. The second quantization module 8121 is configured to perform quantization on an input 3D map point descriptor to obtain quantized data of the 3D map point descriptor. The second binarization module 8122 is configured to perform binarization on input quantized data to obtain binary data of the 3D map point descriptor. The second prediction module 8123 is configured to perform prediction on input binary data to obtain residual data of the 3D map point descriptor. The second encapsulation module 8124 is configured to encapsulate input residual data to obtain a bitstream of the 3D map point descriptor. The third quantization module 8131 is configured to perform quantization on an input 3D map point spatial location to obtain quantized data of the 3D map point spatial location. The third binarization module 8132 is configured to perform binarization on input quantized data to obtain binary data of the 3D map point spatial location. The third prediction module 8133 is configured to perform prediction on input binary data to obtain residual data of the 3D map point spatial location. The third encapsulation module 8134 is configured to encapsulate input residual data to obtain a bitstream of the 3D map point spatial location.

It should be understood that the structures of the first compression submodule, the second compression submodule, and the third compression submodule are described as an example in the embodiment shown in FIG. 8b. However, this does not constitute a limitation on the structures of the first compression submodule, the second compression submodule, and the third compression submodule. The three submodules may include more or fewer modules than those in the example. For details, refer to the structures of the compression module 61 in the embodiments shown in FIG. 6a to FIG. 6f. This is not specifically limited in embodiments of this application.

In this embodiment of this application, a reordering function may be implemented in the foregoing prediction module, that is, a plurality of pieces of to-be-processed data may be reordered before prediction, to improve correlation between adjacent to-be-processed data, thereby further reducing a data volume of the residual data. The to-be-processed data includes at least one of the area descriptor, data of the 3D map point, the 3D map point descriptor, or the 3D map point spatial location.

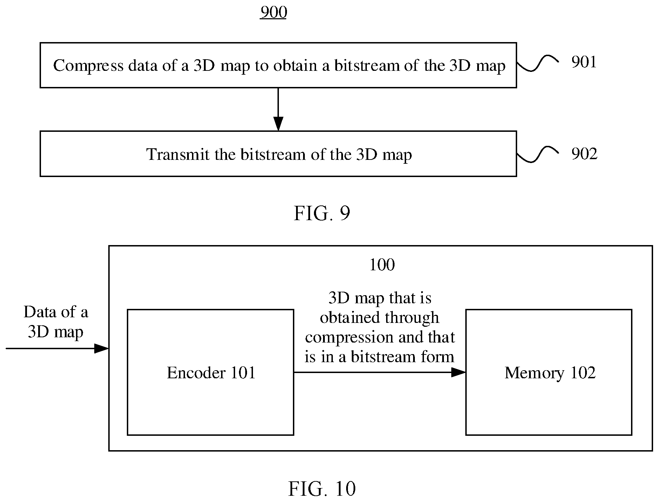

FIG. 9 is a flowchart of a process 900 of a method for encoding a 3D map according to an embodiment of this application. As shown in FIG. 9, the process 900 may be performed by the encoding apparatus in the foregoing embodiment. The process 900 is described as a series of steps or operations. It should be understood that the steps or operations of the process 900 may be performed in various sequences and/or simultaneously, and are not limited to an execution sequence shown in FIG. 9. It is assumed that data of a 3D map is compressed in the encoding apparatus to obtain a bitstream of the 3D map, then the bitstream of the 3D map is transmitted by the encoding apparatus, and the process 900 including the following steps is performed to process the data of the 3D map that is currently being processed.

Step 901: Compress the data of the 3D map to obtain the bitstream of the 3D map.

For the 3D map and the data of the 3D map, refer to the foregoing description. Details are not described herein again.

In this embodiment of this application, compression performed on the 3D map may include compaction and/or prediction, and encapsulation, and the compaction may include quantization and/or binarization. For the foregoing processing, refer to the description in the foregoing embodiments. Details are not described herein again.

Step 902: Transmit the bitstream of the 3D map.

The encoding apparatus may transmit the bitstream of the 3D map to the outside by using a communication link.

FIG. 10 is a diagram of a structure of an apparatus 100 for encoding a 3D map according to an embodiment of this application. As shown in FIG. 10, the encoding apparatus 100 may be used in the server or the electronic device in the foregoing embodiment, especially a device that needs to compress and store a 3D map, for example, the server in the embodiment shown in FIG. 4b, or the electronic device in the embodiment shown in FIG. 4c.

The apparatus 100 for encoding a 3D map in this embodiment of this application includes an encoder 101 and a memory 102. A compressor 101 is configured to compress data of a 3D map to obtain a 3D map that is obtained through compression and that is in a bitstream form, where the 3D map includes a plurality of 3D map points, and the data of the 3D map includes data of the plurality of 3D map points. The memory 101 is configured to store the 3D map that is obtained through compression and that is in a bitstream form. It can be learned that, input data of the compressor 101 is the data of the 3D map, output data is the 3D map that is obtained through compression and that is in a bitstream form, and input data of the memory 101 is the 3D map that is obtained through compression and output by the compressor 101 and that is in a bitstream form.

The compressor 101 may perform compression on the data of the 3D map, to reduce a data volume of the 3D map. In a scenario in which a 3D map needs to be stored, storing compressed data of the 3D map instead of storing original data of the 3D map can reduce space occupied by storage of the data of the 3D map.

In this embodiment of this application, for the compressor 101, refer to the compression module in the embodiments shown in FIG. 5 to FIG. 8b. A difference lies in that the compressor does not include an encapsulation module.

In an implementation process, the steps in the foregoing method embodiments may be completed by an integrated logic circuit in a form of hardware or instructions in a form of software in the processor. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

The memory mentioned in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the system and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, technical solutions of this application essentially, or a part contributing to the conventional technology, or some of technical solutions may be implemented in a form of a software product. The computer software product is stored in a storage medium, and includes several instructions for instructing a computer device (a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A codec system for a 3D map, comprising: an encoding apparatus and a decoding apparatus, wherein the encoding apparatus is communicatively connected to the decoding apparatus;
the encoding apparatus is configured to: compress data of a 3D map to obtain a bitstream of the 3D map, and send the bitstream of the 3D map to the decoding apparatus, wherein the 3D map comprises a plurality of 3D map points, and the data of the 3D map comprises data of the plurality of 3D map points; and
the decoding apparatus is configured to: receive the bitstream of the 3D map, and decompress the bitstream of the 3D map to obtain reconstructed data of the 3D map.

2. The system according to claim 1, wherein the encoding apparatus is a cloud server, and the decoding apparatus is an electronic device; or the encoding apparatus is a first electronic device, and the decoding apparatus is a second electronic device;
the decoding apparatus is further configured to send a 3D map download request to the decoding apparatus, wherein the 3D map download request comprises location indication information; and
the encoding apparatus is further configured to receive the 3D map download request, and send, to the decoding apparatus according to the 3D map download request, a bitstream that is of the 3D map and that corresponds to the location indication information.

3. The system according to claim 1 or 2, wherein the encoding apparatus is an electronic device, and the decoding apparatus is a cloud server; and
the encoding device is specifically configured to: after the 3D map is created, send the bitstream of the 3D map to the decoding apparatus.

4. The system according to any one of claims 1 to 3, wherein the data of the 3D map further comprises a plurality of area descriptors, and any one of the plurality of area descriptors describes features of a part of or all 3D map points of the plurality of 3D map points.

5. The system according to claim 1 or 4, wherein data of any one of the plurality of 3D map points comprises a 3D map point descriptor and a 3D map point spatial location.

6. The system according to any one of claims 1 to 5, wherein the encoding apparatus is further configured to create the 3D map.

7. The system according to any one of claims 1 to 6, wherein the decoding apparatus is further configured to perform positioning based on the 3D map.

8. An apparatus for encoding a 3D map, comprising a compression module and a transmission module, wherein
the compression module is configured to compress data of a 3D map to obtain a bitstream of the 3D map, wherein the 3D map comprises a plurality of 3D map points, and the data of the 3D map comprises data of the plurality of 3D map points; and
the transmission module is configured to transmit the bitstream of the 3D map.

9. The apparatus according to claim 8, wherein the data of the 3D map further comprises a plurality of area descriptors, and any one of the plurality of area descriptors describes features of a part of or all 3D map points of the plurality of 3D map points.

10. The apparatus according to claim 8 or 9, wherein data of any one of the plurality of 3D map points comprises a 3D map point descriptor and a 3D map point spatial location.

11. The apparatus according to any one of claims 8 to 10, wherein the apparatus for encoding a 3D map is a cloud server or an electronic device; and
the transmission module is further configured to: receive a 3D map download request, wherein the 3D map download request comprises location indication information; and send, according to the 3D map download request, a bitstream that is of the 3D map and that corresponds to the location indication information.

12. The apparatus according to any one of claims 8 to 10, wherein the apparatus for encoding a 3D map is an electronic device; and
the transmission module is specifically configured to: after the 3D map is created, send the bitstream of the 3D map.

13. The apparatus according to any one of claims 8 to 12, wherein the compression module comprises a compaction module and/or a prediction module, and an encapsulation module;
the compaction module is configured to perform compaction on input first data to output compacted data of the first data;
the prediction module is configured to perform prediction on input second data to output residual data of the second data;
the encapsulation module is configured to process input third data to output the bitstream of the 3D map; and
the first data is the data of the 3D map, the second data is the data of the 3D map or the compacted data of the first data, and the third data is the compacted data of the first data or the residual data of the second data.

14. The apparatus according to claim 13, wherein the prediction module is further configured to: reorder a plurality of pieces of the second data, and perform, based on a result of reordering, prediction on at least one piece of the second data, to obtain residual data of the at least one piece of the second data.

15. The apparatus according to claim 13 or 14, wherein the compaction module comprises a quantization module and/or a binarization module;
the quantization module is configured to perform quantization on input fourth data to output quantized data of the fourth data; and
the binarization module is configured to perform binarization on input fifth data to output binary data of the fifth data, wherein
the fourth data is the data of the 3D map, and the fifth data is the data of the 3D map or the quantized data of the fourth data.

16. The apparatus according to claim 15, wherein the quantization module comprises a first quantization module and a second quantization module, and/or the binarization module comprises a first binarization module and a second binarization module, and the prediction module comprises a first prediction module and a second prediction module;
the first quantization module is configured to perform quantization on input sixth data to output quantized data of the sixth data;
the first binarization module is configured to perform binarization on input seventh data to output binary data of the seventh data;
the first prediction module is configured to perform prediction on input eighth data to output residual data of the eighth data;
the sixth data is one of the plurality of area descriptors, the seventh data is one of the plurality of area descriptors or the quantized data of the sixth data, and the eighth data is one of the plurality of area descriptors, the quantized data of the sixth data, or the binary data of the seventh data;
the second quantization module is configured to perform quantization on input ninth data to output quantized data of the ninth data;
the second binarization module is configured to perform binarization on input tenth data to output binary data of the tenth data;
the first prediction module is configured to perform prediction on input eleventh data to output residual data of the eleventh data; and
the ninth data is data of one of the plurality of 3D map points, the tenth data is data of one of the plurality of 3D map points or the quantized data of the ninth data, and the eleventh data is data of one of the plurality of 3D map points, the quantized data of the ninth data, or the binary data of the tenth data.

17. The apparatus according to claim 15, wherein the quantization module comprises a first quantization module, a second quantization module, and a third quantization module, and/or the binarization module comprises a first binarization module, a second binarization module, and a third binarization module, and the prediction module comprises a first prediction module, a second prediction module, and a third prediction module;
the first quantization module is configured to perform quantization on input twelfth data to output quantized data of the twelfth data;
the first binarization module is configured to perform binarization on input thirteenth data to output binary data of the thirteenth data;
the first prediction module is configured to perform prediction on input fourteenth data to output residual data of the fourteenth data;
the twelfth data is one of the plurality of area descriptors, the thirteenth data is one of the plurality of area descriptors or the quantized data of the twelfth data, and the fourteenth data is one of the plurality of area descriptors, the quantized data of the twelfth data, or the binary data of the thirteenth data;
the second quantization module is configured to perform quantization on input fifteenth data to output quantized data of the fifteenth data;
the second binarization module is configured to perform binarization on input sixteenth data to output binary data of the sixteenth data;
the second prediction module is configured to perform prediction on input seventeenth data to output residual data of the seventeenth data;
the fifteenth data is a 3D map point descriptor of one of the plurality of 3D map points, the sixteenth data is a 3D map point descriptor of one of the plurality of 3D map points or the quantized data of the fifteenth data, and the seventeenth data is a 3D map point descriptor of one of the plurality of 3D map points, the quantized data of the fifteenth data, or the binary data of the sixteenth data;
the third quantization module is configured to perform quantization on input eighteenth data to output quantized data of the eighteenth data;
the third binarization module is configured to perform binarization on input nineteenth data to output binary data of the nineteenth data;
the third prediction module is configured to perform prediction on input twentieth data to output residual data of the twentieth data; and
the eighteenth data is a spatial location of one of the plurality of 3D map points, the nineteenth data is a spatial location of one of the plurality of 3D map points or the quantized data of the eighteenth data, and the twentieth data is a spatial location of one of the plurality of 3D map points, the quantized data of the eighteenth data, or the binary data of the nineteenth data.

18. The apparatus according to any one of claims 8 to 12, wherein the compression module comprises a first compression submodule and a second compression submodule;
the first compression submodule is configured to compress input twenty-first data to output a bitstream of the twenty-first data;
the second compression submodule is configured to compress input twenty-second data to output a bitstream of the twenty-second data; and
the twenty-first data is one of the plurality of area descriptors, and the twenty-second data is data of one of the plurality of 3D map points.

19. The apparatus according to claim 18, wherein the first compression submodule comprises a first compaction module and/or a first prediction module, and a first encapsulation module; and the second compression submodule comprises a second compaction module and/or a second prediction module, and a second encapsulation module;
the first compaction module is configured to perform compaction on input twenty-third data to output compacted data of the twenty-third data;
the first prediction module is configured to perform prediction on input twenty-fourth data to output residual data of the twenty-fourth data;
the first encapsulation module is configured to process input twenty-fifth data to output a bitstream of the twenty-fifth data;
the twenty-third data is one of the plurality of area descriptors, the twenty-fourth data is one of the plurality of area descriptors or the compacted data of the twenty-third data, and the twenty-fifth data is the compacted data of the twenty-third data or the residual data of the twenty-fourth data;
the second compaction module is configured to perform compaction on input twenty-sixth data to output compacted data of the twenty-sixth data;
the second prediction module is configured to perform prediction on input twenty-seventh data to output residual data of the twenty-seventh data;
the second encapsulation module is configured to process input twenty-eighth data to output a bitstream of the twenty-eighth data; and
the twenty-sixth data is data of one of the plurality of 3D map points, the twenty-seventh data is data of one of the plurality of 3D map points or the compacted data of the twenty-sixth data, and the twenty-eighth data is the compacted data of the twenty-sixth data or the residual data of the twenty-seventh data.

20. The apparatus according to claim 19, wherein the first compaction module comprises a first quantization module and/or a first binarization module, and the second compaction module comprises a second quantization module and/or a second binarization module;
the first quantization module is configured to perform quantization on input twenty-ninth data to output quantized data of the twenty-ninth data;
the first binarization module is configured to perform binarization on input thirtieth data to output binary data of the thirtieth data;
the twenty-ninth data is one of the plurality of area descriptors, and the thirtieth data is one of the plurality of area descriptors or the quantized data of the twenty-ninth data;
the second quantization module is configured to perform quantization on input thirty-first data to output quantized data of the thirty-first data;
the second binarization module is configured to perform binarization on input thirty-second data to output binary data of the thirty-second data; and
the thirty-first data is data of one of the plurality of 3D map points, and the thirtieth data is data of one of the plurality of 3D map points or the quantized data of the thirty-first data.

21. The apparatus according to any one of claims 8 to 12, wherein the compression module comprises a first compression submodule, a second compression submodule, and a third compression submodule;
the first compression submodule is configured to compress input thirty-third data to output a bitstream of the thirty-third data;
the second compression submodule is configured to compress input thirty-fourth data to output a bitstream of the thirty-fourth data;
the third compression submodule is configured to compress input thirty-fifth data to output a bitstream of the thirty-fifth data; and
the thirty-third data is one of the plurality of area descriptors, the thirty-fourth data is a 3D map point descriptor of one of the plurality of 3D map points, and the thirty-fifth data is a 3D map point spatial location of one of the plurality of 3D map points.

22. The apparatus according to claim 21, wherein the first compression submodule comprises a first compaction module and/or a first prediction module, and a first encapsulation module; the second compression submodule comprises a second compaction module and/or a second prediction module, and a second encapsulation module; and the third compression submodule comprises a third compaction module and/or a third prediction module, and a third encapsulation module;
the first compaction module is configured to perform compaction on input thirty-sixth data to output compacted data of the thirty-sixth data;
the first prediction module is configured to perform prediction on input thirty-seventh data to obtain residual data of the thirty-seventh data;
the first encapsulation module is configured to process input thirty-eighth data to obtain a bitstream of the thirty-eighth data;
the thirty-sixth data is one of the plurality of area descriptors, the thirty-seventh data is one of the plurality of area descriptors or the compacted data of the thirty-sixth data, and the thirty-eighth data is the compacted data of the thirty-sixth data or the residual data of the thirty-seventh data;
the second compaction module is configured to perform compaction on input thirty-ninth data to output compacted data of the thirty-ninth data;
the second prediction module is configured to perform prediction on input fortieth data to obtain residual data of the fortieth data;
the second encapsulation module is configured to process input forty-first data to obtain a bitstream of the forty-first data;
the thirty-ninth data is a 3D map point descriptor of one of the plurality of 3D map points, the fortieth data is a 3D map point descriptor of one of the plurality of 3D map points or the compacted data of the thirty-ninth data, and the forty-first data is the compacted data of the thirty-ninth data or the residual data of the fortieth data;
the third compaction module is configured to perform compaction on input forty-second data to output compacted data of the forty-second data;
the third prediction module is configured to perform prediction on input forty-third data to obtain residual data of the forty-third data;
the third encapsulation module is configured to process input forty-fourth data to obtain a bitstream of the forty-fourth data; and
the forty-second data is a spatial location of one of the plurality of 3D map points, the forty-third data is a spatial location of one of the plurality of 3D map points or the compacted data of the forty-second data, and the forty-fourth data is the compacted data of the forty-second data or the residual data of the forty-third data.

23. The apparatus according to claim 22, wherein the first compaction module comprises a first quantization module and/or a first binarization module; the second compaction module comprises a second quantization module and/or a second binarization module; and the third compaction module comprises a third quantization module and/or a third binarization module;
the first quantization module is configured to perform quantization on input forty-fifth data to output quantized data of the forty-fifth data;
the first binarization module is configured to perform binarization on input forty-sixth data to output binary data of the forty-sixth data;
the forty-fifth data is one of the plurality of area descriptors, and the forty-sixth data is one of the plurality of area descriptors or the quantized data of the forty-fifth data;
the second quantization module is configured to perform quantization on input forty-seventh data to output quantized data of the forty-seventh data;
the second binarization module is configured to perform binarization on input forty-eighth data to output binary data of the forty-eighth data;
the forty-seventh data is a 3D map point descriptor of one of the plurality of 3D map points, and the forty-eighth data is a 3D map point descriptor of one of the plurality of 3D map points or the quantized data of the forty-seventh data;
the third quantization module is configured to perform quantization on input forty-ninth data to output quantized data of the forty-ninth data;
the third binarization module is configured to perform binarization on input fiftieth data to output binary data of the fiftieth data; and
the forty-ninth data is a spatial location of one of the plurality of 3D map points, and the fiftieth data is a spatial location of one of the plurality of 3D map points or the quantized data of the forty-ninth data.

24. A method for encoding a 3D map, comprising:
compressing data of a 3D map to obtain a bitstream of the 3D map, wherein the 3D map comprises a plurality of 3D map points, and the data of the 3D map comprises data of the plurality of 3D map points; and
transmitting the bitstream of the 3D map.

25. The method according to claim 24, wherein the data of the 3D map further comprises a plurality of area descriptors, and any one of the plurality of area descriptors describes features of a part of or all 3D map points of the plurality of 3D map points.

26. The method according to claim 24 or 25, wherein data of any one of the plurality of 3D map points comprises a 3D map point descriptor and a 3D map point spatial location.

27. The method according to any one of claims 24 to 26, further comprising:
receiving a 3D map download request, wherein the 3D map download request comprises location indication information; and
the transmitting a bitstream of the 3D map comprises:
sending, according to the 3D map download request, a bitstream that is of the 3D map and that corresponds to the location indication information.

28. The method according to any one of claims 24 to 26, wherein the transmitting a bitstream of the 3D map comprises:
after the 3D map is created, sending the bitstream of the 3D map.

29. The method according to any one of claims 24 to 28, wherein the compressing data of a 3D map to obtain a bitstream of the 3D map comprises:
performing compaction on first data to obtain compacted data of the first data, and/or performing prediction on second data to obtain residual data of the second data; and
processing third data to obtain the bitstream of the 3D map, wherein
the first data is the data of the 3D map, the second data is the data of the 3D map or the compacted data of the first data, and the third data is the compacted data of the first data or the residual data of the second data.

30. The method according to claim 29, wherein before the performing prediction on second data to obtain residual data of the second data, the method further comprises:
reordering a plurality of pieces of the second data; and
the performing prediction on second data to obtain residual data of the second data comprises:
performing, based on a result of the reordering, prediction on at least one piece of the second data, to obtain residual data of the at least one piece of the second data.

31. The method according to claim 29 or 30, wherein the performing compaction on first data to obtain compacted data of the first data comprises:
performing quantization on fourth data to obtain quantized data of the fourth data, and/or performing binarization on fifth data to obtain binary data of the fifth data, wherein
the fourth data is the first data, the fifth data is the first data or the quantized data of the fourth data, and correspondingly, the compacted data of the first data comprises the quantized data of the fourth data and/or the binary data of the fifth data.

32. An apparatus for encoding a 3D map, comprising:
one or more processors; and
a memory, configured to store one or more programs, wherein
when the one or more programs are executed by the one or more processors, the one or more processors are enabled to implement the method according to any one of claims 24 to 31.

33. An apparatus for encoding a 3D map, comprising:
an encoder, configured to compress data of a 3D map to obtain a 3D map that is obtained through compression and that is in a bitstream form, wherein the 3D map comprises a plurality of 3D map points, and the data of the 3D map comprises data of the plurality of 3D map points; and
a memory, configured to store the 3D map that is obtained through compression and that is in a bitstream form.

34. The apparatus according to claim 33, wherein the data of the 3D map further comprises a plurality of area descriptors, and any one of the plurality of area descriptors describes features of a part of or all 3D map points of the plurality of 3D map points.

35. The apparatus according to claim 33 or 34, wherein data of any one of the plurality of 3D map points comprises a 3D map point descriptor and a 3D map point spatial location.

36. The apparatus according to any one of claims 33 to 35, wherein the apparatus for encoding a 3D map is a cloud server or an electronic device.

37. A computer-readable storage medium, comprising a computer program, wherein when the computer program is executed on a computer, the computer is enabled to perform the method according to any one of claims 24 to 31.

38. A computer program, wherein when the computer program is executed on a computer, the computer is enabled to perform the method according to any one of claims 24 to 31.

39. A non-transitory storage medium, comprising a bitstream encoded by using the method according to any one of claims 24 to 31.
